# EUROPÄISCHE PATENTANMELDUNG

(11) **EP 3 352 155 A1**
(43) Veröffentlichungstag der Anmeldung: **25.07.2018**
(21) Anmeldenummer: 17204276.4
(22) Anmeldetag: 29.11.2017
(51) Int. Cl.: G08G 1/14, G01C 21/34, B62D 15/02

(54) **VERFAHREN UND SYSTEM ZUM BESTIMMEN EINER EIGENSCHAFT EINER PARKLÜCKE, PARKRAUMVERWALTUNGSSYSTEM, VERFAHREN ZUR UNTERSTÜTZUNG EINES FAHRERS BEIM PARKEN EINES FAHRZEUGS UND FAHRZEUG**

(30) Priorität: 19.01.2017 DE 102017100979
(71) Anmelder: Valeo Schalter und Sensoren GmbH, 74321 Bietigheim-Bissingen (DE)
(72) Erfinder: Haenisch, Stephan, 74321 Bietigheim-Bissingen (DE); Prinzhausen (geb. Sattler), Stefanie, 74321 Bietigheim-Bissingen (DE)

(57) **Zusammenfassung**

Die Erfindung betrifft ein Verfahren zur Bestimmung einer Eigenschaft einer in einem Parkraumverwaltungssystem hinterlegten Parklücke (L1, L2, L3, L4), ein Parkraumverwaltungssystem (100), ein Verfahren zur Unterstützung eines Fahrers beim Parken sowie ein Fahrzeug (F1). Dabei wird eine Eigenschaft einer Parklücke (L1, L2, L3, L4) bestimmt durch Erfassen mehrerer Zustandsgrößen eines Fahrzeugs (F1) während eines Fahrmanövers, Auswerten der erfassten Zustandsgrößen und Prüfen, ob das Fahrmanöver ein beendeter Parkvorgang ist, und falls ein beendeter Parkvorgang erkannt worden ist, Ermitteln wenigstens einer Eigenschaft der Parklücke (L1) anhand der erfassten Fahrzustandsgrößen und/oder bereitgestellter Fahrzeugdaten des Fahrzeugs (F1), Identifizieren der Parklücke (L1) und Zuordnen wenigstens einer der ermittelten Eigenschaften der Parklücke (L1) zu der identifizierten Parklücke (L1). Abhängig von einer auf diese Weise ermittelten Eigenschaft kann für ein parklückensuchendes Fahrzeug eine geeignete Parklücke (L1, L2, L3, L4) ausgewählt und an das parklückensuchende Fahrzeug übermittelt werden.

## Beschreibung

Die Erfindung betrifft ein Verfahren zur Bestimmung wenigstens einer Eigenschaft einer in einem Parkraumverwaltungssystem und/oder in einem Fahrzeug hinterlegten oder zu hinterlegenden Parklücke für ein Fahrzeug.

Ferner betrifft die Erfindung ein Parkraumverwaltungssystem, wobei das Parkraumverwaltungssystem eine Entscheidungseinrichtung zum Auswählen einer geeigneten Parklücke aus einer Vielzahl an hinterlegten Parklücken für ein Fahrzeug, eine Speichervorrichtung zum Hinterlegen von Informationen zu erfassten Parklücken sowie Kommunikationsmittel zum Bereitstellen einer Kommunikationsverbindung mit wenigstens einem Fahrzeug und/oder einem Mobilgerät aufweist, wobei das Parkraumverwaltungssystem dazu eingerichtet ist, wenigstens von einem Fahrzeug Positionsdaten von existierenden Parklücken sowie Daten mit Informationen über die Eigenschaften der Parklücken zu empfangen und in der Speichervorrichtung derart zu hinterlegen, dass die Eigenschaften den Parklücken zugeordnet hinterlegt sind, wobei das Parkraumverwaltungssystem dazu eingerichtet ist, von wenigstens von einem Fahrzeug und/oder einem Mobilgerät eine Parklückensuchanfrage für das Fahrzeug zu empfangen, und wobei das Parkraumverwaltungssystem dazu eingerichtet ist, auf eine Parklückensuchanfrage hin, aus den hinterlegten Parklücken eine für das parklückensuchende Fahrzeug geeignete, insbesondere eine geeignete und freie Parklücke auszuwählen und die Position der Parklücke an das Fahrzeug und/oder das Mobilgerät zu übermitteln.

Des Weiteren betrifft die Erfindung ein Verfahren zur Unterstützung eines Fahrers eines Fahrzeugs beim Parken des Fahrzeugs mithilfe eines Parkraumverwaltungssystems, welches dazu eingerichtet ist, wenigstens von einem ersten Fahrzeug Positionsdaten von existierenden Parklücken sowie Daten mit Informationen über Eigenschaften der Parklücken zu empfangen und in einer Speichervorrichtung derart zu hinterlegen, dass die Eigenschaften den Parklücken zugeordnet hinterlegt sind, wobei das Parkraumverwaltungssystem weiter dazu eingerichtet ist von einem parklückensuchenden zweiten Fahrzeug und/oder einem Mobilgerät eine Parklückensuchanfrage zu empfangen, und wobei das Parkraumverwaltungssystem dazu eingerichtet ist, auf eine Parklückensuchanfrage hin, aus den hinterlegten Parklücken eine für ein parklückensuchendes Fahrzeug geeignete Parklücke auszuwählen und die Position der Parklücke an das parklückensuchende, zweite Fahrzeug und/oder das Mobilgerät zu übermitteln.

Außerdem betrifft die Erfindung ein Fahrzeug, insbesondere ein Kraftfahrzeug, wobei das Fahrzeug wenigstens eine Sensoreinrichtung zum Erfassen wenigstens einer Zustandsgröße des Fahrzeugs, eine Identifikationseinrichtung zum Identifizieren einer Parklücke, und Kommunikationsmittel zum Bereitstellen einer Kommunikationsverbindung mit einem Parkraumverwaltungssystem aufweist, und wobei das Fahrzeug dazu ausgebildet ist, Positionsdaten einer Parklücke sowie Daten mit Informationen über die Eigenschaften der Parklücke an ein Parkraumverwaltungssystem zu senden.

Gattungsgemäße Parkraumverwaltungssysteme sowie mit diesen kommunizierende Fahrzeuge bzw. Verfahren zum Erfassen von Parklücken sind aus dem Stand der Technik grundsätzlich bekannt, beispielsweise aus der DE 10 2009 039 086 A1, der DE 10 2004 018 204 A1, der DE 10 2005 028 000 A1 oder der DE 10 2013 222 071 A1.

Insbesondere ist bekannt, mithilfe einer an einem ersten Fahrzeug angeordneten Umfeldsensorvorrichtung Parklücken zu erfassen und diese an das Parkraumverwaltungssystem zu melden, wobei dazu in der Regel Positionsdaten der Parklücke sowie deren Längen- und Breitenabmessungen an das Parkraumverwaltungssystem übermittelt werden, und im Falle einer Parklückensuchanfrage eines zweiten Fahrzeugs eine geeignete Parklücke, insbesondere eine ausreichend große Parklücke, aus den dem Parkraumverwaltungssystem gemeldeten Parklücken auszuwählen und an das parklückensuchende, zweite Fahrzeug zu übermitteln.

Damit eine ausreichende Anzahl Parklücken erfasst und in einem Parkraumverwaltungssystem hinterlegt werden kann, ist eine ausreichende Anzahl an Fahrzeugen mit einer entsprechenden Umfeldsensorvorrichtung erforderlich. Diese ist jedoch sehr kostenintensiv und in der Regel keine Serienausstattung, so dass nicht alle Fahrzeuge eine Umfeldsensorvorrichtung aufweisen.

Ferner können mit der Umfeldsensorvorrichtung lediglich die Abmessungen einer Parklücke erfasst werden. Eine Bewertung, wie gut bzw. einfach es sich, insbesondere mit bestimmten Arten von Fahrzeugen (Sportwagen, SUV, Kleinlaster, etc.), in einer auf diese Weise erfassten Parklücke parken lässt, ermöglicht die Umfeldsensorvorrichtung jedoch nicht.

Infolgedessen kann es mit einem gattungsgemäßen, aus dem Stand der Technik bekannten Parkplatzverwaltungssystem passieren, dass dem Fahrer eines Fahrzeugs eine für sein Fahrzeug ungeeignete Parklücke gemeldet wird, dem Fahrer eines tiefergelegten Sportwagens beispielsweise eine Parklücke, bei der zum Einparken ein Bordstein überfahren werden muss, was mit dem Sportwagen jedoch nicht beschädigungsfrei möglich ist, allerdings mit einem SUV.

Es ist daher eine Aufgabe der Erfindung, ein alternatives Verfahren zur Bestimmung wenigstens einer Eigenschaft einer Parklücke bereitzustellen, insbesondere ein Verfahren, dass eine verbesserte Auswahl einer geeigneten Parklücke für ein Fahrzeug ermöglicht. Des Weiteren ist es eine Aufgabe der Erfindung ein alternatives, insbesondere verbessertes Parkraumverwaltungssystem, ein alternatives, insbesondere verbessertes Verfahren zur Unterstützung eines Fahrers beim Parken eines Fahrzeugs sowie und entsprechend zur Kommunikation mit einem vorbeschriebenen Parkraumverwaltungssystem sowie für die Durchführung eines vorbeschriebenen Verfahrens ausgebildetes Fahrzeug bereitzustellen.

Diese Aufgabe wird durch ein erfindungsgemäßes Verfahren zur Bestimmung wenigstens einer Eigenschaft einer Parklücke, durch ein erfindungsgemäßes Parkraumverwaltungssystem, durch ein erfindungsgemäßes Verfahren zur Unterstützung eines Fahrers beim Parken eines Fahrzeugs sowie durch ein erfindungsgemäßes Fahrzeug gemäß den jeweiligen unabhängigen Patentansprüchen gelöst. Vorteilhafte Ausführungen der Erfindung sind Gegenstand der abhängigen Patentansprüche, der Beschreibung und der Figuren und werden im Folgenden näher erläutert.

Ein erfindungsgemäßes Verfahren zur Bestimmung wenigstens einer Eigenschaft einer in einem Parkraumverwaltungssystem und/oder in einem Fahrzeug hinterlegten oder zu hinterlegenden Parklücke für ein Fahrzeug ist gekennzeichnet durch die Schritte:
- Erfassen einer oder mehrerer Zustandsgrößen eines Fahrzeugs während eines Fahrmanövers mittels wenigstens einer Sensoreinrichtung des Fahrzeugs,
- Auswerten der erfassten Zustandsgrößen des Fahrzeugs und Prüfen mittels einer Auswerteeinrichtung, ob das Fahrmanöver ein beendeter Parkvorgang ist, wobei das Fahrmanöver als beendeter Parkvorgang erkannt wird, wenn wenigstens eine, für einen beendeten Parkvorgang charakteristische, vordefinierte Bedingung erfüllt ist, und falls ein beendeter Parkvorgang erkannt worden ist,
- Ermitteln einer oder mehrerer Eigenschaften der Parklücke anhand der erfassten Fahrzustandsgrößen und/oder bereitgestellter Fahrzeugdaten des Fahrzeugs mittels der Auswerteinrichtung,
- Identifizieren der Parklücke mittels einer Identifikationseinrichtung, und
- Zuordnen wenigstens einer der ermittelten Eigenschaften der Parklücke zu der identifizierten Parklücke.

Eine Parklücke im Sinne der Erfindung ist dabei ein Parkplatz bzw. eine Parkfläche für ein einziges Fahrzeug.

Und unter einer Zustandsgröße im Sinne der Erfindung wird eine Größe verstanden, mithilfe derer ein Zustand eines Fahrzeugs beschrieben werden kann. Mithilfe einer Umfeldsensorvorrichtung erfasste Informationen hinsichtlich einer Parklücke, insbesondere erfasste Längen und Breitenabmessungen einer Parklücke, sind demzufolge keine Zustandsgrößen im Sinne der Erfindung, da diese nicht den Zustand eines Fahrzeugs beschreiben, sondern Eigenschaften der erfassten Parklücke.

Ein Parkvorgang wird dabei vorzugsweise als beendet erkannt, wenn die Auswertung der erfassten Zustandsgrößen ergibt, dass das Fahrzeug bis in den Stillstand verzögert worden ist und sich vorzugsweise seit einer definierten Zeitdauer im Stillstand befindet, wobei besonders bevorzugt ein Parkvorgang als beendet erkannt wird, wenn sich das Fahrzeug seit mehr als drei Minuten im Stillstand befindet.

Die Identifizierung der Parklücke erfolgt vorzugsweise, indem eine Position der Parklücke in einem definierten Referenzkoordinatensystem bestimmt wird, insbesondere mithilfe einer Navigationseinrichtung des Fahrzeugs. Dabei wird vorzugsweise die Position der identifizierten Parklücke mit den Positionen der im Parkraumverwaltungssystem und/oder im Fahrzeug hinterlegten Parklücken verglichen, wobei insbesondere anhand des Positionsvergleichs festgestellt wird, ob die identifizierte Parklücke bereits im Parkraumverwaltungssystem und/oder im Fahrzeug hinterlegt ist oder nicht. Ist noch keine Parklücke mit der ermittelten Position im Parkraumverwaltungssystem und/oder im Fahrzeug hinterlegt, wird vorzugsweise die identifizierte Parklücke zusammen mit dem für die identifizierte Parklücke ermittelten Eigenschaften hinterlegt.

Die während eines Fahrmanövers erfassten Zustandsgrößen werden dabei vorzugsweise zunächst in einem Zwischenspeicher abgelegt, wobei insbesondere von zumindest einigen erfassten Zustandsgrößen ein zeitlicher Verlauf zwischengespeichert wird, so dass eine Auswertung der Zustandsgrößen in Abhängigkeit von ihrem zeitlichen Verlauf möglich ist. Dazu weist das Fahrzeug vorzugsweise eine geeignete Zwischenspeichereinrichtung auf, insbesondere einen Buffer bzw. Ringspeicher, welcher über eine ausreichende Speicherkapazität verfügt, um die erfassten Zustandsgrößen über einen ausreichenden Zeitraum zwischenzuspeichern.

Vorzugsweise ist die Zwischenspeichereinrichtung wenigstens dazu ausgebildet, zumindest einen Teil der erfassten Zustandsgrößen über einen Zeitraum von wenigstens 60 Sekunden, insbesondere von wenigstens 120 Sekunden, besonders bevorzugt von mehr als 180 Sekunden zwischenzuspeichern.

Die erfindungsgemäße Bestimmung von Eigenschaften einer Parklücke mithilfe von Zustandsgrößen eines parkenden Fahrzeugs, insbesondere erst nachdem ein Parkvorgang als beendet erkannt worden ist, ermöglicht auf einfache und damit vorteilhafte Art und Weise zu ermitteln, ob in einer, in einem Parkraumverwaltungssystem hinterlegten Parklücke jemals geparkt worden ist. Dadurch kann die Qualität einer Unterstützungsdienstleistung, insbesondere die Qualität eines Verfahrens zur Unterstützung eines Fahrers eines Fahrzeugs beim Parken mithilfe eines Parkraumverwaltungssystems, bei dem auf eine Parklückensuchanfrage hin geeignete Parklücken übermittelt werden, deutlich verbessert werden.

Insbesondere kann die Anzahl der als geeignet vorgeschlagenen, aber in Wirklichkeit nicht geeigneten Parklücke und somit die Anzahl an Fehlzuweisungen erheblich reduziert werden. Ferner ermöglicht ein erfindungsgemäßes Verfahren zur Bestimmung wenigstens einer Eigenschaft einer Parklücke eine Reduzierung der Datenmenge und eine Verbesserung der Datenqualität der in einem Parkraumverwaltungssystem hinterlegten Daten, insbesondere hinsichtlich der hinterlegten Parklücken, denn auf diese Weise können Parklücken identifiziert und gelöscht werden, in den noch nie geparkt worden ist.

Darüber hinaus können durch die Auswertung der Zustandsgrößen des Fahrzeugs Eigenschaften einer Parklücke erfasst werden, welche mit einer Umfeldsensorvorrichtung nicht erkannt werden können, beispielsweise ob es sich um eine Längsparklücke, eine Querparklücke, eine Fischgrätenparklücke oder eine sonstige Parklücke handelt und/oder ob zum Parken in einer Parklücke ein Bordstein überfahren werden muss und/oder ob die Parklücke durch einen Bordstein begrenzt ist.

Unter einer Querparklücke wird im Sinne der Erfindung dabei eine Parklücke verstanden, deren Längsrichtung sich etwa in einem Winkel von 90° zu einer Fahrspur für ein Fahrzeug erstreckt, unter eine Linksparklücke eine Parklücke, deren Längsrichtung sich etwa parallel zur Fahrspur erstreckt und unter einer Fischgrätenparklücke eine Parklücke, deren Längsrichtung sich in einem Winkel zwischen 10° bis 80° oder 100°-170° zur Fahrspur erstreckt.

Somit ermöglicht ein erfindungsgemäßes Verfahren nicht nur die Erfassung von Parklücken, sondern darüber hinaus eine Evaluierung bzw. Bewertung von erfassten Parklücken.

Ferner ermöglicht ein Parkraumverwaltungssystem, in dem Parklücken mit auf erfindungsgemäße Weise bestimmten Eigenschaften hinterlegt sind, die Auswahl einer geeigneten Parklücke auf eine Parklückensuchanfrage mit vorgegebenen Suchkriterien hin und nicht lediglich, wie aus dem Stand der Technik bekannt, die Auswahl aus Parklücken, welche sich in einem definierten Umkreis des parklückensuchend Fahrzeugs befinden, eine erforderliche Mindestgröße aufweisen und/oder frei und damit verfügbar sind.

Ein weiterer Vorteil eines erfindungsgemäßen Verfahrens zur Bestimmung von Eigenschaften einer Parklücke mithilfe von Zustandsgrößen ist, dass zur Erfassung der Zustandsgrößen des Fahrzeugs die Sensoreinrichtungen des Fahrzeugs verwendet werden. Somit sind keine zusätzlichen, aufwendigen und damit kostenintensiven Sensoreinrichtungen erforderlich.

Bei einem erfindungsgemäßen Verfahren wird vorzugsweise außerdem ausgewertet, ob der als beendet erkannte Parkvorgang manuell durchgeführt worden ist, d.h. der Fahrer hat alleine ohne Unterstützung durch ein Parkassistenzsystem geparkt, oder halbautomatisch, d.h. mit Unterstützung durch ein Parkassistenzsystem, oder autonom, d.h. vollständig alleine durch das Fahrzeug.

Das vorzugsweise zur Durchführung eines erfindungsgemäßen Verfahrens vorhandene Parkraumverwaltungssystem kann dabei in das Fahrzeug, mit welchem die Zustandsgrößen erfasst werden, integriert sein. Vorzugsweise ist das Parkraumverwaltungssystem jedoch zusammen mit dem die Zustandsgrößen erfassenden Fahrzeug Teil eines Netzwerkes, insbesondere eine Art "Cloud", wobei in diesem Fall wenigstens das Fahrzeug und das Parkraumverwaltungssystem miteinander kommunikationsverbunden und/oder kommunikationsverbindbar sind.

In einer vorteilhaften Ausgestaltung eines erfindungsgemäßen Verfahrens zum Bestimmen wenigstens einer Eigenschaft einer Parklücke wird wenigstens eine der ermittelten Eigenschaften für die identifizierte Parklücke im Parkraumverwaltungssystem und/oder im Fahrzeug als Eigenschaft der identifizierten Parklücke hinterlegt.

Das Ermitteln und/oder Zuordnen wenigstens einer Eigenschaft der Parklücke kann dabei jeweils entweder im Parkraumverwaltungssystem erfolgen, d.h. die erfassten Zustandsgrößen werden an das Parkraumverwaltungssystem übertragen und dort ausgewertet, oder aber im Fahrzeug, wobei im letzteren Fall vorzugsweise jeweils nur bereits ermittelte Eigenschaften an das Parkraumverwaltungssystem übertragen werden, was aufgrund geringerer, zu übermittelnder Datenmengen vorteilhafter ist.

Das Hinterlegen wenigstens einer ermittelten Eigenschaft einer identifizierten Parklücke erfolgt dabei bevorzugt, indem die die ermittelte Eigenschaft an das Parkraumverwaltungssystem und/oder das Fahrzeug übertragen wird, insbesondere mithilfe der bestehenden Kommunikationsverbindung zwischen Fahrzeug und Parkraumverwaltungssystem, und dort in einer entsprechend ausgebildeten Speichervorrichtung als der identifizierten Parklücke zugeordnete Eigenschaft abgelegt wird.

In einer weiteren vorteilhaften Ausgestaltung eines erfindungsgemäßen Verfahrens zur Bestimmung wenigstens einer Eigenschaft einer Parklücke wird anhand der erfassten Zustandsgrößen geprüft, ob der Parkvorgang erfolgreich beendet worden ist, wobei, falls der Parkvorgang als erfolgreich beendet erkannt worden ist, der zugehörigen identifizierten Parklücke die Eigenschaft "zum Parken geeignet" zugeordnet wird, vorzugsweise jeweils in Verbindung mit bereitgestellten Fahrzeugdaten von dem Fahrzeug, mit welchem der Parkvorgang durchgeführt worden ist, insbesondere mit Fahrzeugdaten, welche Informationen über die Art und/oder Größe des Fahrzeugs enthalten.

Auf diese Weise können zum einen auch ohne Umfeldsensorvorrichtung noch nicht im Parkraumverwaltungssystem und/oder im Fahrzeug hinterlegte Parklücken als Parklücken identifiziert werden, denn wenn erkannt worden ist, dass ein Fahrzeug dort erfolgreich geparkt hat, muss es sich um eine Parklücke im Sinne der Erfindung handeln.

Anhand von Informationen über das geparkte Fahrzeug, insbesondere anhand von Informationen über dessen Abmessungen, kann auf diese Weise ferner auf die Mindestgröße der Parklücke, in welcher das Fahrzeug erfolgreich geparkt worden ist, geschlossen werden.

Werden zusätzlich noch weitere Informationen über das geparkte Fahrzeug dieser identifizierten Parklücke zugeordnet, wie beispielsweise die Art des Fahrzeugs, z.B., ob es sich um einen PKW, einen Transporter, einen Kleinlaster, ein Wohnmobil, ein Gespann, insbesondere ein Caravan-Gespann, einen Omnibus, einen Reisebus oder einen Lkw handelt, und/oder ob das geparkte Fahrzeug ein Sportwagen, ein SUV und/oder ein Elektrofahrzeug ist, lässt sich bestimmen, für welche Art und/oder für welche Größe von Fahrzeugen die Parklücke zum Parken geeignet ist.

In einer weiteren vorteilhaften Ausgestaltung eines erfindungsgemäßen Verfahrens zum Bestimmen wenigstens einer Eigenschaft einer Parklücke wird ein Parkvorgang als erfolgreich beendet erkannt, insbesondere als ein erfolgreich beendeter Einparkvorgang, wenn die Auswertung der erfassten Zustandsgrößen ergibt, dass sich das Fahrzeug im Stillstand befindet, vorzugsweise seit einem definierten Zeitraum, insbesondere seit wenigstens drei Minuten, und/oder der Motor ausgeschaltet ist und/oder die Zündung ausgeschaltet ist und/oder der Fahrergurt gelöst worden ist und/oder der Fahrersitz nicht mehr als belegt erkannt wird und/oder eine Bluetooth-Verbindung zwischen dem Fahrzeug und einem Mobiltelefon gibt getrennt worden ist und/oder sich der Fahrzeugschlüssel außerhalb des Fahrzeugs befindet und/oder das Fahrzeug an eine Ladestation angeschlossen worden ist und oder das Fahrzeug von außen verriegelt worden ist.

Dabei wird vorzugsweise der Motor nicht als ausgeschaltet im Sinne der Erfindung betrachtet, wenn der Motor infolge eines Autos-Start-Stopp-Vorgangs ausgeschaltet worden ist.

Die vorige Aufzählung von Bedingungen ist dabei nicht abschließend zu verstehen. D.h., es können auch alternative oder zusätzliche Bedingungen zum Erkennen eines erfolgreichen Parkvorgangs herangezogen werden, beispielsweise das Einlegen eines Rückwärtsganges mit anschließenden Verzögern bis in den Stillstand, mehrere definierte Gangwechsel zwischen definierten Gängen innerhalb eines definierten Zeitraumes, mehrfaches Rangieren mit kurzen Rangierwegen innerhalb eines definierten Zeitraumes, insbesondere mit anschließendem Verzögern bis in den Stillstand für vorzugsweise länger als drei Minuten, das Aktivieren einer Alarmanlage des Fahrzeugs, die Aktivierung einer Lenkradverriegelung und/oder die Aktivierung einer Wegfahrsperre oder dergleichen.

Können nicht nur Einparkvorgänge als erfolgreich beendet erkannt werden, sondern darüber hinaus auch Ausparkvorgänge, wird vorzugsweise, nachdem ein Einparkvorgang als erfolgreich beendet erkannt worden ist, der zugehörigen, identifizierten Parklücke außerdem die Eigenschaft "belegt" zugeordnet, vorzugsweise jedoch nur vorübergehend, bis für diese Parklücke ein Ausparkvorgang als erfolgreich beendet erkannt worden ist.

Um auch Ausparkvorgänge erkennen zu können, wird vorzugsweise ein Parkvorgang auch als beendet erkannt, wenn das Fahrzeug nach dem Anfahren aus dem Stillstand die aktuelle Fahrzeuggeschwindigkeit einen definierten Parkende-Geschwindigkeit Schwellwert überschreitet, insbesondere innerhalb einer definierten Zeitdauer nach Beendigung des Stillstandes.

Und besonders bevorzugt wird ferner ein Parkvorgang als erfolgreich beendet erkannt, insbesondere als ein erfolgreich beendeter Ausparkvorgang, wenn die Auswertung der erfassten Zustandsgrößen ergibt, dass das Fahrzeug von außen entriegelt worden ist und/oder, vorzugsweise innerhalb eines ersten definierten Zeitraums nach dem Entriegeln von außen, der Fahrer in das Fahrzeug eingestiegen ist und/oder die Zündung eingeschaltet worden ist und/oder der Motor eingeschaltet worden ist und die Fahrzeuggeschwindigkeit innerhalb eines zweiten definierten Zeitraums nach dem Einschalten des Motors einen definierten Parkende-Geschwindigkeitsschwellwert übersch reitet.

Wird ein erfolgreich beendeter Ausparkvorgang erkannt, wird vorzugsweise die zugehörige Parklücke identifiziert und insbesondere vorübergehend als frei im Parkraumverwaltungssystem und/oder im Fahrzeug hinterlegt.

Zur Evaluierung einer identifizierten Parklücke kann es in einigen Fällen vorteilhaft sein, wenn die erfassten Zustandsgrößen auch auf nicht erfolgreich beendete Parkvorgänge hin ausgewertet werden, insbesondere derart, dass auch abgebrochene Parkvorgänge erkannt werden können, wobei dazu entsprechende Kriterien zu definieren und hinterlegen sind, anhand derer die nicht erfolgreiche Beendigung eines Parkvorgangs erkannt werden kann.

Vorzugsweise wird ein Parkvorgang dabei als nicht erfolgreich beendet erkannt, wenn nicht innerhalb eines definierten Zeitraums, nachdem der Parkvorgang als beendet erkannt worden ist, ein erfolgreiches Beenden des Parkvorgangs erkannt worden ist.

Wird ein Parkvorgang als nicht erfolgreich beendet erkannt, wird vorzugsweise der zugehörigen, identifizierten Parklücke die Eigenschaft "nicht zum Parken geeignet" zugeordnet, insbesondere jeweils in Verbindung mit bereitgestellten Fahrzeugdaten von dem Fahrzeug, mit welchem der Parkvorgang durchgeführt worden ist, insbesondere mit Fahrzeugdaten, welche Informationen über die Art und/oder Größe des Fahrzeugs enthalten.

Insbesondere bei nicht erfolgreich beendeten Parkmanöver ist es wichtig, die Kriterien für die Bestimmung, Zuordnung und/oder Hinterlegung von Eigenschaften zu einer identifizierten Parklücke derart zu wählen, dass möglichst nur abgebrochene Parkvorgänge erfasst werden, bei denen versucht wurde, in einer tatsächlichen Parklücke zu parken, und beispielsweise nicht das wiederholte Anhalten und Anfahren im Stoppand-Go-Verkehr. Dadurch kann vermieden werden, dass eine Vielzahl an nicht zum Parken geeigneten Parklücken erfasst wird. Die Fehlerfassung von Parklücken kann dabei beispielsweise verhindert werden, wenn nur tatsächlich zum Parken geeignete Parklücken neu im Parkraumverwaltungssystem und/oder im Fahrzeug hinterlegt werden können und insbesondere nur bereits hinterlegten Parklücken die Eigenschaft "nicht zum Parken geeignet" infolge eines nicht erfolgreich beendeten Parkvorgangs zugeordnet werden können.

In einer weiteren vorteilhaften Ausgestaltung eines erfindungsgemäßen Verfahrens zum Bestimmen wenigstens einer Eigenschaft einer Parklücke wird aus den während des Fahrmanövers erfassten Zustandsgrößen eine Trajektorie des Fahrzeugs berechnet, wobei die berechnete Trajektorie vorzugsweise in einem Zwischenspeicher abgelegt wird, insbesondere deren Verlauf über der Zeit, wobei die berechnete Trajektorie vorzugsweise wenigstens zwischengespeichert wird, bis ein erfolgreich beendeter Parkvorgang erkannt worden ist.

Zur Berechnung der Trajektorie des Fahrzeugs werden vorzugsweise wenigstens eine Raddrehzahl und wenigstens ein Lenkwinkel des Fahrzeugs als Zustandsgrößen erfasst und in Verbindung mit einem hinterlegten oder ermittelten Radumfang zur Berechnung der Trajektorie der herangezogen. Besonders bevorzugt wird die Trajektorie dabei nur berechnet, wenn eine aktuelle Fahrzeuggeschwindigkeit einen definierten Trajektorienberechnungs-Geschwindigkeitsschwellenwert unterschreitet.

In einer weiteren vorteilhaften Ausgestaltung eines erfindungsgemäßen Verfahrens zum Bestimmen wenigstens einer Eigenschaft einer Parklücke wird, falls ein Parkvorgang als erfolgreich beendet erkannt worden ist, die für eine definierte Strecke unmittelbar vor dem Erreichen einer Parkposition bzw. dem erfolgreichen Beenden des Parkvorgangs, und/oder die für einen definierten Zeitraum unmittelbar vor dem Ende dieses Parkvorgangs und/oder die in einem Zeitraum ab einem bestimmten Ereignis bis zum Ende des Parkvorgangs aus den während des Fahrmanövers erfassten Zustandsgrößen berechnete und zwischengespeicherte Trajektorie der identifizierten Parklücke zugeordnet und vorzugsweise für die identifizierte Parklücke hinterlegt.

Vorzugsweise wird die Trajektorie dabei mittels vorhandener Ortsbestimmungssysteme, zum Beispiel mithilfe eines GPS-Systems, auf ein einheitliches Koordinatensystem umgerechnet, besonders bevorzugt derart, dass die Trajektorie im gleichem Koordinatensystem hinterlegt werden kann wie die Position der Parklücke.

In einer weiteren vorteilhaften Ausgestaltung eines erfindungsgemäßen Verfahrens zum Bestimmen wenigstens einer Eigenschaft einer Parklücke wird anhand der der identifizierten Parklücke zugeordneten Trajektorie bestimmt, um was für eine Art von Parklücke es sich handelt, insbesondere, ob die identifizierte Parklücke eine Längsparklücke, eine Querparklücke, eine Fischgrätenparklücke oder eine sonstige Parklücke ist, wobei das Ergebnis vorzugsweise der identifizierten Parklücke zugeordnet wird und insbesondere im Parkraumverwaltungssystem und/oder im Fahrzeug für die identifizierte Parklücke hinterlegt wird.

Dies ermöglicht unter anderem, auf eine Parklückensuchanfrage hin, beispielsweise nur Parklücken vorzuschlagen, welche Querparklücken sind. Ferner ermöglicht die Hinterlegung der Art der Parklücke eine Parklückensuchanfrage mit Filterkriterien, beispielsweise nur nach Längsparklücken.

Die Ermittlung der Art der identifizierten Parklücke kann dabei entweder anhand einer einzelnen, für diese Parklücke berechnete Trajektorie erfolgen, wobei in diesem Fall vorzugsweise das auf diese Weise ermittelte Ergebnis der Art der Parklücke anschließend statistisch ausgewertet und validiert wird. Alternativ oder zusätzlich können aber auch die jeweils für eine identifizierte Parklücke berechneten Trajektorien zunächst statistisch ausgewertet werden, insbesondere gemittelt werden, und aus diesem Ergebnis anschließend die Art der Parklücke bestimmt werden.

Dabei hat es sich als besonders vorteilhaft herausgestellt, wenn anhand einer oder mehrerer, für eine identifizierte Parklücke ermittelten Trajektorien nicht nur die Art der Parklücke in Form von Längsparklücke, Querparklücke, Fischgrätenparklücke oder sonstiger Parklücke bestimmt wird, sondern außerdem ob es sich um eine Vorwärts-Einparklücke, eine Rückwärts-Einparklücke, eine Links-Längsparklücke oder eine Rechts-Längsparklücke handelt, ermittelt wird.

In einer weiteren vorteilhaften Ausgestaltung eines erfindungsgemäßen Verfahrens zum Bestimmen wenigstens einer Eigenschaft einer Parklücke erfolgt die Bestimmung der Art der Parklücke wenigstens in Abhängigkeit vom Verlauf der Trajektorie und/oder in Abhängigkeit eines Anfahrtwinkels, wobei der Anfahrtwinkel der Winkel zwischen der Fahrzeuglängsrichtung des Fahrzeugs zu Beginn der Anfahrt der Parklücke und der Fahrzeuglängsrichtung am Ende des erfolgreichen Parkvorgangs ist.

Unter dem Anfangspunkt wird im Sinne der Erfindung dabei der Punkt verstanden, insbesondere die Position, an welchem die der identifizierten Parklücke zugeordnete und hinterlegte Trajektorie beginnt. Der Endpunkt ist dabei der Punkt, insbesondere die Position, an welcher der Parkvorgang als erfolgreich beendet erkannt worden ist, welcher vorzugsweise dem Ende der Trajektorie, die zu der identifizierten Parklücke hinterlegt ist, entspricht.

Die Fahrzeuglängsrichtung im Anfangspunkt und im Endpunkt ergibt sich dabei jeweils aus der zugehörigen, in diesem Punkt anliegenden Tangente der in die Fahrbahnebene projizierten Trajektorie. D.h. die Fahrzeuglängsrichtung zum Anfangspunkt ist durch die Tangente der in die Fahrbahnebene projizierten Trajektorie im Anfangspunkt definiert und die Fahrzeuglängsrichtung zum Endpunkt durch die Tangente der in Fahrbahnebene projizierten Trajektorie im Endpunkt.

In einer weiteren vorteilhaften Ausgestaltung eines erfindungsgemäßen Verfahrens wird vorzugsweise anhand der erfassten Zustandsgrößen des Fahrzeugs geprüft, insbesondere anhand der für eine definierte Strecke unmittelbar vor dem Erreichen einer Parkposition und/oder der für einen definierten Zeitraum unmittelbar vor dem Ende des Parkvorgangs und/oder der in einem Zeitraum ab einem bestimmten Ereignis bis zum Ende des Parkvorgangs erfasste Zustandsgrößen, ob im Bereich der Parklücke ein Bordstein vorhanden ist, wobei vorzugsweise, falls ein Bordstein als vorhanden erkannt wird, geprüft wird, ob der Bordstein die Parklücke begrenzt und/oder überfahrbar ist. Vorzugsweise wird alternativ oder zusätzlich überprüft, ob ein oder mehrere andere Hindernisse in der identifizierten Parklücke vorhanden sind.

In einer weiteren vorteilhaften Ausgestaltung eines erfindungsgemäßen Verfahrens zum Bestimmen wenigstens einer Eigenschaft einer Parklücke wird zur Prüfung, ob eine Parklücke einen Bordstein aufweist, wenigstens ein Motormoment des Fahrzeugs und/oder eine Fahrzeuglängsneigung und/oder eine Fahrzeugquerneigung und/oder eine Fahrzeugbeschleunigung in wenigstens einer Raumrichtung erfasst und ausgewertet.

Mithilfe der Information, ob eine Parklücke einen Bordstein aufweist, der gegebenenfalls zu überfahren ist, lassen sich beispielsweise Parklücken für Fahrzeuge mit einer besonders geringen Bodenfreiheit, was beispielsweise bei tiefergelegten Sportwagenhäufig vorkommt, als ungeeignet ausschließen, während derartige Parklücken einem parklückensuchenden Fahrzeug mit ausreichender Bodenfreiheit, wie beispielsweise einem SUV (Sports Utility Vehicle), als geeignet zugewiesen werden können.

In einer weiteren vorteilhaften Ausgestaltung eines erfindungsgemäßen Verfahrens zum Bestimmen wenigstens einer Eigenschaft einer Parklücke wird die Parklücke nur identifiziert und/oder eine oder mehrere Eigenschaften der Parklücke anhand der erfassten Fahrzustandsgrößen und/oder bereitgestellter Fahrzeugdaten nur ermittelt und/oder wenigstens eine ermittelte Eigenschaften der Parklücke der identifizierten Parklücke nur zugeordnet und/oder wenigstens eine ermittelte Eigenschaften für die identifizierte Parklücke im Parkraumverwaltungssystem und/oder im Fahrzeug nur hinterlegt, wenn der Parkvorgang als erfolgreich beendet erkannt worden ist. Dadurch kann die erforderliche Rechenleistung zur Durchführung eines erfindungsgemäßen Verfahrens zur Bestimmung wenigstens einer Eigenschaft einer Parklücke so gering wie möglich gehalten werden.

Ein erfindungsgemäßes Parkraumverwaltungssystem ist dadurch gekennzeichnet, dass die Entscheidungseinrichtung des Parkraumverwaltungssystems dazu ausgebildet ist, die Eignung einer Parklücke für das parklückensuchende Fahrzeug in Abhängigkeit wenigstens einer Eigenschaft zu bestimmen die durch ein vorbeschriebenes, erfindungsgemäßes Verfahren bestimmt und im Parkraumverwaltungssystem hinterlegt worden ist.

Ein Vorteil eines erfindungsgemäßen Parkraumverwaltungssystems ist, dass die Anzahl der Fehlzuweisungen, das heißt die Anzahl der Fälle, in denen einem parklückensuchenden Fahrzeug eine für das Fahrzeug ungeeignete Parklücke zugewiesen worden ist, reduziert werden kann.

Ein weiterer Vorteil ist, dass die Datenmenge der hinterlegten Parklücken ohne merkliche Qualitätsverluste reduziert werden kann, indem beispielsweise Parklücken, die innerhalb eines definierten Zeitraums nicht als "zum Parken geeignet" bestätigt worden sind, gelöscht werden können.

Ferner ermöglicht ein erfindungsgemäßes Parkraumverwaltungssystem eine verbesserte fahrzeugspezifische Auswahl eines geeigneten Parkplatzes und ist damit besonders anwenderfreundlich und kundenfreundlich, was sich vorteilhaft auf die Wirtschaftlichkeit des Parkraumverwaltungssystems auswirkt.

Vorzugsweise ist ein erfindungsgemäßes Parkraumverwaltungssystem dabei dazu ausgebildet, Positionsdaten von Parklücken von mehreren Fahrzeugen zu empfangen und einem oder mehreren Fahrzeugen und/oder einem oder mehreren Mobilgeräten eine geeignete Parklücke für ein parklückensuchendes Fahrzeug, insbesondere die Positionsdaten einer geeigneten Parklücke zu übermitteln, gegebenenfalls mit zusätzlichen Informationen über die Parklücke, beispielsweise mit zumindest einigen der für diese Parklücke hinterlegten Eigenschaften.

Ist ein erfindungsgemäßes Parkraumverwaltungssystem auch dazu ausgebildet, auf Parklückensuchanfragen von einem Mobilgerät einen geeigneten Parkplatz auszuwählen, wobei vorzugsweise mithilfe des Mobilgerätes Daten bzw. Informationen über das parklückensuchende Fahrzeug zusammen mit der Parklückensuchanfrage an das Parkraumverwaltungssystem übertragen werden können, kann auch an Fahrer von Fahrzeugen, welche nicht mit dem Parkraumverwaltungssystem kommunikationsverbunden sind oder in Kommunikationsverbindung gebracht werden können, eine geeignete Parklücke bzw. deren Positionsdaten, übermittelt werden. Dadurch kann die Anzahl der Nutzer des Parkraumverwaltungssystems erhöht werden, wodurch sich weitere, wirtschaftliche Vorteile ergeben.

In einer vorteilhaften Ausgestaltung eines erfindungsgemäßen Parkraumverwaltungssystems ist das Parkraumverwaltungssystem dazu ausgebildet, aus mehreren, derselben Parklücke zugeordneten, für diese Parklücke hinterlegten, insbesondere durch ein erfindungsgemäßes Verfahren ermittelten Eigenschaften, eine oder mehrere weitere Eigenschaften für diese Parklücke zu ermitteln, insbesondere mithilfe statistischer Auswertungen. Dazu kann ein erfindungsgemäßes Parkraumverwaltungssystem vorzugsweise eine oder mehrere der insbesondere mithilfe eines erfindungsgemäßen, vorbeschriebenen Verfahrens ermittelten Eigenschaften klassifizieren und oder durch Mittelwertbildung oder dergleichen weitere Eigenschaften einer Parklücke bestimmen. Auf diese Weise kann insbesondere ermittelt werden, für welche Arten von Fahrzeugen eine Parklücke besonders geeignet ist, so dass diese Parklücke vorzugsweise diesen Arten von Fahrzeugen als geeignet zugewiesen werden kann. Dadurch kann eine besonders fahrzeugspezifische und damit anwenderfreundliche bzw. kundenorientierte Parklückenzuweisung erreicht werden.

Bevorzugt werden dabei jeweils die am meisten als "zum Parken geeignet" bestätigten Parklücken als geeignet ausgewählt, allerdings besonders bevorzugt nur, sofern diese als "frei" hinterlegt sind.

Dadurch kann beispielsweise erreicht werden, dass eine Parklücke, in der zu 80 % SUVs parken, da beim Einparken ein Bordstein zu überfahren ist, nicht als geeignet für einen tiefergelegten Sportwagen oder ein Fahrzeug mit dem Wunsch autonom einzuparken, ausgewählt werden, mit welchen das Überfahren eines Bordsteins in der Regel ohne Beschädigung nicht möglich ist.

Ferner erlaubt ein erfindungsgemäßes Parkraumverwaltungssystem Parklückensuchanfragen mit definierten Suchkriterien, beispielsweise die Suche nur nach Querparklücken oder nur nach Längsparklücken, in die vorwärts eingepackt werden kann.

Ergänzend ist ein erfindungsgemäßes Parkraumverwaltungssystem vorzugsweise dazu ausgebildet, auf aus dem Stand der Technik bekannte Art und Weise mittels einer Umfeldsensorvorrichtung eines Fahrzeugs erfasste Informationen zu einer identifizierten Parklücke als Eigenschaft der Parklücke zu hinterlegen sowie auf diese Art und Weise erfasste Parklücke als neu erkannte Parklücken zu hinterlegen.

Ein erfindungsgemäßes Parkraumverwaltungssystem kann dabei zum Empfangen während eines Fahrmanövers erfasster Zustandsgrößen ausgebildet sein und eine entsprechende Auswerteeinrichtung zum Auswerten und Prüfen der erfassten Zustandsgrößen des Fahrzeugs aufweisen, insbesondere zum Prüfen, ob das Fahrmanöver ein beendeter Parkvorgang ist, wobei die Auswerteeinrichtung vorzugsweise Teil der Entscheidungseinrichtung ist, und wobei die Auswerteeinrichtung insbesondere dazu ausgebildet ist, ein Fahrmanöver als beendeten Parkvorgang zu erkennen, wenn wenigstens eine, für einen beendeten Parkvorgang charakteristische, vordefinierte Bedingung erfüllt ist, und falls ein beendeter Parkvorgang erkannt worden ist, eine oder mehrere Eigenschaften der Parklücke anhand der erfassten Fahrzustandsgrößen und/oder bereitgestellter Fahrzeugdaten zu ermitteln. Vorzugsweise ist das Parkraumverwaltungssystem, insbesondere die Auswerteeinrichtung, in diesem Fall auch zur Durchführung der einzelnen, vorbeschriebenen weiteren Verfahrensschritte eines erfindungsgemäßen Verfahren zur Bestimmung wenigstens einer Eigenschaft einer Parklücke ausgebildet.

Die Auswerteeinrichtung kann alternativ oder zusätzlich auch einem Fahrzeug zugeordnet sein, wobei in diesem Fall das Parkraumverwaltungssystem, insbesondere dessen Entscheidungseinrichtung vorzugsweise lediglich zum Empfangen von Positionsdaten einer identifizierten Parklücke sowie von Informationen bezüglich der für die identifizierte Parklücke ermittelten Eigenschaften ausgebildet ist, sowie zum Ermitteln mehrerer, weitere Eigenschaften dieser Parklücke, vorzugsweise aus mehreren, derselben Parklücke zugeordneten, für diese Parklücke hinterlegten, insbesondere aufgrund von Zustandsgrößen eines Fahrzeugs ermittelten Eigenschaftswerten, insbesondere mittels statistischer Auswertungen.

Vorzugsweise ist das Parkraumverwaltungssystem dazu ausgebildet, auf eine Parklückensuchanfrage mit definierten Suchkriterien hin für ein parklückensuchendes Fahrzeug eine geeignete Parklücke zu bestimmen und die Position der Parklücke an das Fahrzeug und/oder ein Mobilgerät zu übermitteln.

In einer weiteren vorteilhaften Ausgestaltung eines erfindungsgemäßen Parkraumverwaltungssystem ist das Parkraumverwaltungssystem dazu ausgebildet, anhand wenigstens einer, einer Parklücke zugeordneten und im Parkraumverwaltungssystem für diese Parklücke hinterlegten Trajektorie zu bestimmen, um was für eine Art von Parklücke es sich handelt, insbesondere, ob diese Parklücke eine Längsparklücke, eine Querparklücke, eine Fischgrätenparklücke oder eine sonstige Parklücke ist, und das Ergebnis vorzugsweise dieser Parklücke zuzuordnen und im Parkraumverwaltungssystem zu hinterlegen. Diese Art der Ausgestaltung eines erfindungsgemäßen Parkraumverwaltungssystems ist insbesondere erforderlich, wenn die Art der Parklücke nicht nur anhand einer auf Basis von einem einzigen Fahrzeug ermittelten Zustandsgrößen berechnete Trajektorie ermittelt werden soll, sondern auf Basis mehrerer für diese Parklücke ermittelten Trajektorien.

Vorzugsweise ist ein erfindungsgemäßes Parkraumverwaltungssystem dazu ausgebildet, die Art der Parklücke wenigstens in Abhängigkeit vom Verlauf der Trajektorie und/oder in Abhängigkeit eines Anfahrtwinkels zu bestimmen.

In einer weiteren vorteilhaften Ausgestaltung eines erfindungsgemäßen Parkraumverwaltungssystem ist das Parkraumverwaltungssystem dazu ausgebildet, aus mehreren, derselben Parklücke zugeordneten, hinterlegten Trajektorien eine vorteilhafte Trajektorie zu ermitteln, insbesondere eine vorteilhafte Einparktrajektorie, wobei das Parkraumverwaltungssystem vorzugsweise dazu ausgebildet ist, die vorteilhafte Trajektorie der als geeignet ausgewählten Parklücke an das parklückensuchende Fahrzeug zu übermitteln, insbesondere zusammen mit den Positionsdaten der als geeignet ausgewählten Parklücke.

Wird eine als vorteilhaft für eine identifizierte Parklücke ermittelte Trajektorie zusammen mit den Positionsdaten der als geeignet ausgewählten Parklücke an das parklückensuchende Fahrzeug und/oder das jeweilige Mobilgerät, von welchem eine Parklückensuchanfrage ausging, übermittelt, kann der Fahrer des parklückensuchenden Fahrzeugs beim Einparken in vorteilhafter Weise unterstützt werden.

Ein erfindungsgemäßes Verfahren zur Unterstützung eines Fahrers eines Fahrzeugs beim Parken des Fahrzeugs mithilfe eines Parkraumverwaltungssystems ist gekennzeichnet durch die Schritte:
- Aufbauen einer Kommunikationsverbindung zwischen einem parklückensuchenden Fahrzeug und/oder einem Mobilgerät mit einem erfindungsgemäßen Parkraumverwaltungssystem,
- Senden einer Parklückenanfrage an das Parkraumverwaltungssystem, insbesondere in Verbindung mit Fahrzeugdaten des parklückensuchenden Fahrzeugs an das Parkraumverwaltungssystem,
- Empfangen der Parklückensuchanfrage durch das Parkraumverwaltungssystem,
- Auswählen einer geeigneten Parklücke für das parklückensuchende Fahrzeug aus den im Parkraumverwaltungssystem hinterlegten Parklücken anhand der den hinterlegten Parklücken zugeordneten und hinterlegten Eigenschaften, wobei wenigstens für eine Parklücke, aus denen eine geeignete Parklücke ausgewählt wird, eine Eigenschaft durch ein erfindungsgemäßes Verfahren bestimmt worden und hinterlegt ist, und
- Übermitteln der Position der geeigneten Parklücke an das parklückensuchende Fahrzeug und/oder das Mobilgerät.

Bei der Auswahl einer für das parklückensuchende Fahrzeug geeignete Parklücke wird vorzugsweise wenigstens eine durch ein erfindungsgemäßes Verfahren bestimmte Eigenschaft wenigstens einer Parklücke berücksichtigt. Dadurch kann, wie vorstehend bereits mehrfach erläutert worden ist, die Anzahl der Fehlermeldungen reduziert werden und die Anwenderfreundlichkeit gesteigert werden.

Vorzugsweise wird ferner die als geeignet ausgewählte Parklücke außerdem dem parklückensuchenden Fahrzeug zugewiesen bzw. vorübergehend als nicht mehr verfügbar markiert, und insbesondere erst wieder, bis ein erfolgreich beendeter Ausparkvorgang erkannt worden ist, als "frei" gemeldet. Dadurch lässt sich eine besonders effiziente Parkraumverwaltung ermöglichen.

In einer vorteilhaften Ausgestaltung eines erfindungsgemäßen Verfahren zur Unterstützung eines Fahrers eines Fahrzeugs beim Parken seines Fahrzeugs wird, insbesondere vor dem Auswählen einer geeigneten Parklücke, aus mehreren, derselben Parklücke zugeordneten, für diese Parklücke hinterlegten, und insbesondere durch ein erfindungsgemäßes Verfahren bestimmten Eigenschaft einer Parklücke, eine oder mehrere weitere Eigenschaften dieser Parklücke ermittelt und hinterlegt, insbesondere mithilfe statistischer Auswertungen. Dadurch kann die Auswahl einer geeigneten Parklücke noch weiter verbessert werden. Insbesondere eine statistische Auswertung und/oder Validierung der hinterlegten Eigenschaften verbessert die Datenqualität. Die auf diese Weise ermittelten weiteren Eigenschaften und gegebenenfalls bereits hinterlegten Eigenschaften werden vorzugsweise bei der Auswahl einer geeigneten Parklücke ebenfalls berücksichtigt. Dadurch kann die Anzahl der Fehlzuweisungen noch weiter reduziert werden und die Anwenderfreundlichkeit noch weiter gesteigert werden.

In einer weiteren vorteilhaften Ausgestaltung eines erfindungsgemäßen Verfahren zur Unterstützung eines Fahrers eines Fahrzeugs beim Parken, wird, insbesondere vor dem Auswählen einer geeigneten Parklücke, aus mehreren, derselben Parklücke zugeordneten, den für diese Parklücke ermittelten und hinterlegten Trajektorien eine vorteilhafte Trajektorie für diese Parklücke ermittelt und hinterlegt, insbesondere eine vorteilhafte Einparktrajektorie.

In einer weiteren vorteilhaften Ausgestaltung eines erfindungsgemäßen Verfahren zur Unterstützung eines Fahrers beim Parken eines Fahrzeugs wird zusätzlich zur Position der ausgewählten, geeigneten Parklücke die vorteilhafte Trajektorie der als geeignet ausgewählten Parklücke, insbesondere die vorteilhafte Einparktrajektorie, an das parklückensuchende Fahrzeug und/oder das Mobilgerät übermittelt. Dadurch kann der Fahrer eines Fahrzeugs beim Parken besonders gut unterstützt werden, insbesondere kann im auf diese Weise der Einparkvorgang erheblich erleichtert werden.

In einer weiteren vorteilhaften Ausgestaltung eines erfindungsgemäßen Verfahrens zur Unterstützung eines Fahrers beim Parken eines Fahrzeugs wird die vorteilhafte Trajektorie und/oder eine Parkposition im Fahrzeug und/oder auf dem Mobilgerät mittels einer Anzeigeeinrichtung angezeigt. Durch die Visualisierung der vorteilhaften Trajektorie kann eine besonders gute Unterstützung des Fahrers beim Parken erreicht werden.

Weist das parklückensuchende Fahrzeug eine Parkassistenzvorrichtung auf und/oder ist dazu ausgebildet, autonom zu parken, wird vorzugsweise die vorteilhafte Trajektorie der an die Parkassistenzvorrichtung und/oder die autonome Parkvorrichtung übermittelt, insbesondere als definierter, vorgegebener Fahrweg.

In einer weiteren vorteilhaften Ausgestaltung eines erfindungsgemäßen Verfahrens zur Unterstützung eines Fahrers eines Fahrzeugs beim Parken wird die übermittelte, vorteilhafte Trajektorie und/oder die übermittelte Parkposition als Vorgabe für eine Parkassistenzvorrichtung genutzt, insbesondere zum assistierten oder autonomen parken des parklückensuchenden Fahrzeugs.

Ein erfindungsgemäßes Fahrzeug ist dadurch gekennzeichnet, dass das Fahrzeug dazu ausgebildet ist, erfasste Zustandsgrößen des Fahrzeugs zur Ermittlung von Eigenschaften einer Parklücke und/oder Eigenschaften einer Parklücke, die in Abhängigkeit von den erfassten Zustandsgrößen ermittelt worden sind, an ein Parkraumverwaltungssystem zu übertragen, insbesondere an ein erfindungsgemäßes Parkraumverwaltungssystem.

In einer vorteilhaften Ausgestaltung eines erfindungsgemäßen Fahrzeug weist das Fahrzeug eine Auswerteinrichtung zum Auswerten und Prüfen der erfassten Zustandsgrößen des Fahrzeugs auf, insbesondere zum Prüfen, ob das Fahrmanöver ein beendeter Parkvorgang ist, wobei die Auswerteinrichtung vorzugsweise dazu ausgebildet ist, ein Fahrmanöver als beendeten Parkvorgang zu erkennen, wenn wenigstens eine, für einen beendeten Parkvorgang charakteristische, vordefinierte Bedingung erfüllt ist, und falls ein beendeter Parkvorgang erkannt worden ist, Zustandsgrößen des Fahrzeugs zur Ermittlung von Eigenschaften der Parklücke an das Verwaltungssystem zu übertragen, oder eine oder mehrere Eigenschaften der Parklücke anhand der erfassten Fahrzustandsgrößen und/oder bereitgestellter Fahrzeugdaten zu ermitteln, wobei das Fahrzeug und/oder die Auswerteinrichtung vorzugsweise zur Durchführung der vorgenannten Verfahrensschritte eines erfindungsgemäßen Verfahrens zur Bestimmung von wenigstens einer Eigenschaft eines einer Parklücke ausgebildet ist.

Vorzugsweise sind das parklückensuchende Fahrzeug und/oder das Mobilgerät dabei dazu ausgebildet ist, zusätzlich zu den Positionsdaten der als geeignet ausgewählten Parklücke eine vorteilhafte Trajektorie, insbesondere eine vorteilhafte Einparktrajektorie, und/oder eine zu erreichende Parkposition zu empfangen.

Besonders bevorzugt weist das Fahrzeug und/oder das Mobilgerät dabei eine Anzeigevorrichtung auf, die dazu ausgebildet ist, die zu erreichende Parkposition und/oder die vorteilhafte Trajektorie anzuzeigen.

Vorzugsweise ist das Fahrzeug auch dazu ausgebildet ist, die ermittelten Eigenschaften der identifizierten Parklücke zuzuordnen und an das Parkraumverwaltungssystem zu übertragen und/oder im Fahrzeug zu hinterlegen.

Weist das parklückensuchende Fahrzeug eine Parkassistenzvorrichtung auf und/oder ist dazu ausgebildet, autonom zu parken, ist das Fahrzeug vorzugsweise derart ausgebildet, dass die vorteilhafte Trajektorie und/oder die übermittelte, zu erreichende Parkposition als Vorgabe für eine Parkassistenzvorrichtung genutzt werden kann, insbesondere zum assistierten oder autonomen Parken des parklückensuchenden Fahrzeugs. Vorzugsweise weisen das parklückensuchende Fahrzeug und/oder das Mobilgerät dabei eine Anzeigevorrichtung auf, die dazu ausgebildet ist, eine Parkplatzposition und/oder eine vorteilhafte Trajektorie anzuzeigen.

Die mit Bezug auf ein erfindungsgemäßes Verfahren zum Bestimmen wenigstens einer Eigenschaft einer Parklücke vorgestellten, vorteilhaften Ausgestaltungen und deren Vorteile gelten entsprechend auch für ein erfindungsgemäßes Parkraumverwaltungssystem, ein erfindungsgemäße Verfahren zur Unterstützung eines Fahrers beim Parken sowie für ein erfindungsgemäßes Fahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgenden in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, sofern dies technisch sinnvoll ist.

Die Erfindung wird nun anhand mehrerer, vorteilhafter Ausführungsbeispiel unter Bezugnahme auf die beigefügten Zeichnungen näher erläutert.

Es zeigen schematisch:
- Fig. 1a: ein Ausführungsbeispiel eines erfindungsgemäßen Parkraumverwaltungssystems und ein Ausführungsbeispiel eines erfindungsgemäßen Fahrzeugs als Teil eines Netzwerks in einem ersten Zustand,
- Fig. 1b: das Netzwerk aus Fig. 1a in einem zweiten Zustand,
- Fig. 2: ein beispielhaftes Ablaufschema eines erfindungsgemäßen Verfahrens zum Bestimmen wenigstens einer Eigenschaft einer Parklücke,
- Fig. 3a: ein erfindungsgemäßes Fahrzeug vor dem Einparken in eine Querparklücke,
- Fig. 3b: das erfindungsgemäße Fahrzeug aus Fig. 3a nach dem Einparken in eine Querparklücke,
- Fig. 3c: das erfindungsgemäße Fahrzeug aus den Fig. 3a und 3b vor dem Einparken in eine Längsparklücke,
- Fig. 3d: das erfindungsgemäße Fahrzeug aus den Fig. 3a bis 3c nach dem Einparken in eine Längsparklücke,
- Fig. 4a: das Netzwerk aus den Fig. 1a und 1b in einem dritten Zustand mit einem zweiten erfindungsgemäßen Fahrzeug anstatt dem ersten erfindungsgemäßen Fahrzeug,
- Fig. 4b: das Netzwerk aus Fig. 4a in einem vierten Zustand,
- Fig. 5: ein beispielhaftes Ablaufschema für ein erfindungsgemäßes Verfahren zur Unterstützung eines Fahrers eines Fahrzeugs beim Parken seines Fahrzeugs,
- Fig. 6a: das Netzwerk aus den vorangegangenen Fig. 1a, 1b, 4a und 4b mit einem ersten erfindungsgemäßen Fahrzeug und einem zweiten erfindungsgemäßen Fahrzeug in einem fünften Zustand und
- Fig. 6b: das Netzwerk aus Fig. 6a in einem sechsten Zustand.

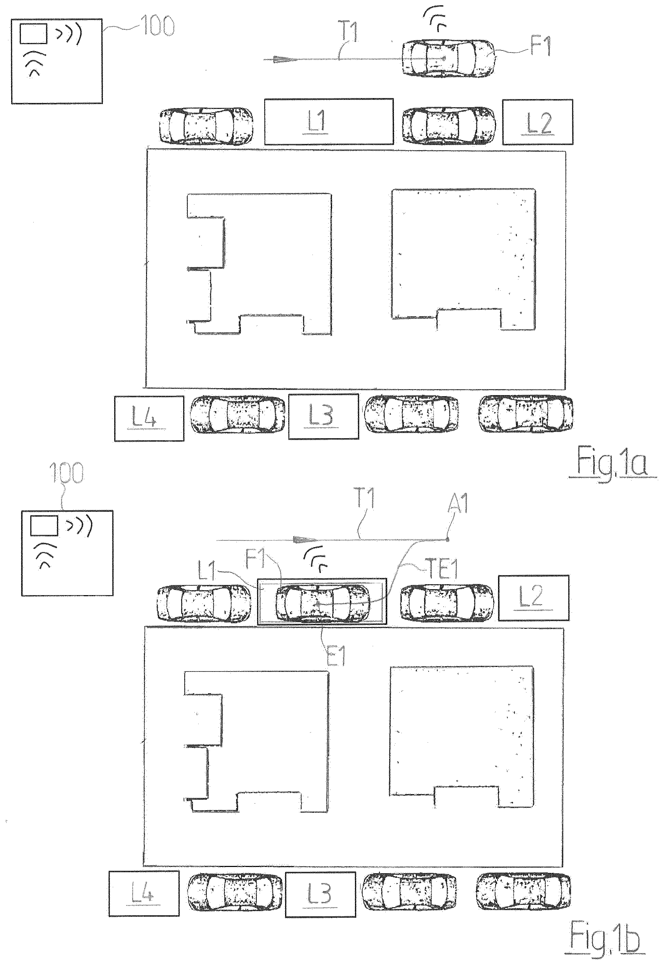

Fig. 1a zeigt ein Ausführungsbeispiel eines erfindungsgemäßen Parkraumverwaltungssystems 100 und ein Ausführungsbeispiel eines ersten, erfindungsgemäßen Fahrzeugs F1 als Teil eines Netzwerks in einem ersten Zustand, wobei das Netzwerk zur Durchführung eines erfindungsgemäßen Verfahrens zur Unterstützung eines Fahrers eines Fahrzeugs beim Parken seines Fahrzeugs ausgebildet ist.

Das erfindungsgemäße Parkraumverwaltungssystem 100 ist dabei dazu ausgebildet ist, die Eignung einer Parklücke für ein parklückensuchendes Fahrzeug in Abhängigkeit wenigstens einer Eigenschaft zu bestimmen, die durch ein erfindungsgemäßes Verfahren bestimmt und im Parkraumverwaltungssystem 100 hinterlegt worden ist, wobei bei dem in Fig. 1a dargestellten, ersten Zustand des erfindungsgemäßen Parkraumverwaltungssystems 100 vier Parklücken L1 bis L4 hinterlegt sind, welche jeweils von einem Fahrzeug mit einer Umfeldsensorvorrichtung erfasst worden sind und zusammen mit ihren Längenund Breitenabmessungen im Parkverwaltungssystem hinterlegt sind.

Zur Auswahl einer geeigneten Parklücke aus den hinterlegten Parklücken L1 bis L4 weist das erfindungsgemäße Parkraumverwaltungssystem 100 eine hier nicht näher bezeichnete Entscheidungseinrichtung auf, eine ebenfalls nicht näher bezeichnete Speichervorrichtung zum Hinterlegen von Informationen zu den erfassten Parklücken L1 bis L4 sowie ebenfalls nicht näher dargestellte Kommunikationsmittel zum Bereitstellen einer Kommunikationsverbindung zu wenigstens einem Fahrzeug, wobei das erfindungsgemäße Parkraumverwaltungssystem 100 in diesem Fall dazu ausgebildet ist, mittels einer WLAN-Verbindung mit dem erfindungsgemäße ausgebildeten, ersten Fahrzeug F1 zu kommunizieren und insbesondere Daten mit dem ersten Fahrzeug F1 auszutauschen. Alternativ oder zusätzlich kann auch eine andere Art von Kommunikationsverbindung genutzt werden, beispielsweise die Kommunikation über Bluetooth und/oder ein Mobilfunknetz.

Das erfindungsgemäße Parkraumverwaltungssystem 100 ist dabei dazu eingerichtet, von mehreren Fahrzeugen, wobei hier in Fig. 1a beispielhalber nur das erste Fahrzeug F1 dargestellt ist, Positionsdaten von einer Vielzahl an existierenden Parklücken, welche in Fig. 1a durch die vier Parklücken L1 bis L4 symbolisiert sind, so wie Daten mit Informationen über die Eigenschaften der Parklücken L1 bis L4 zu empfangen und in der Speichervorrichtung derart zu hinterlegen, dass die Eigenschaften den Parklücken L1 bis L4 zugeordnet hinterlegt sind.

Ferner ist das erfindungsgemäße Parkraumverwaltungssystem 100 dazu eingerichtet, von mehreren Fahrzeugen, unter anderem auch vom ersten Fahrzeug F1, sowie von mehreren Mobilgeräten eine Parklückensuchanfrage für ein parklückensuchendes Fahrzeug zu empfangen.

Des Weiteren ist das erfindungsgemäße Parkraumverwaltungssystem 100 dazu eingerichtet, auf eine Parklückensuchanfrage hin, aus den hinterlegten Parklücken L1 bis L4 eine für das parklückensuchende Fahrzeug geeignete, insbesondere eine freie und geeignete Parklücke auszuwählen und die Position der Parklücke an das parklückensuchende Fahrzeug bzw. das Mobilgerät zu übermitteln.

Erfindungsgemäß ist das Parkraumverwaltungssystem 100, bzw. insbesondere dessen Entscheidungseinrichtung, dazu ausgebildet, die Eignung einer Parklücke für das parklückensuchende Fahrzeug in Abhängigkeit wenigstens einer Eigenschaft zu bestimmen, die durch ein in Folgendem näher erläutertes, erfindungsgemäßes Verfahren zur Bestimmung wenigstens einer Eigenschaft einer Parklücke bestimmt worden ist und im Parkraumverwaltungssystem 100 hinterlegt worden ist.

Das erfindungsgemäß ausgebildete, erste Fahrzeug F1 ist ein als reines Elektrofahrzeug ausgebildeter Personenkraftwagen, welcher mehrere, nicht näher bezeichnete, aus dem Stand der Technik grundsätzlich bekannte Sensoreinrichtungen zum Erfassen mehrerer Zustandsgrößen des Fahrzeugs F1 aufweist sowie ein Navigationsgerät als Identifikationseinrichtung zum Identifizieren einer Parklücke und Kommunikationsmittel zum Bereitstellen einer Kommunikationsverbindung mit einem erfindungsgemäßen Parkraumverwaltungssystem, insbesondere mit dem erfindungsgemäßen Parkraumverwaltungssystem 100 des in Fig. 1a dargestellten Netzwerks, wobei das erste Fahrzeug F1 dabei dazu ausgebildet ist, mit dem Parkraumverwaltungssystem 100 über eine WLAN-Verbindung zu kommunizieren.

Das Fahrzeug F1 ist ferner dazu ausgebildet, Positionsdaten einer Parklücke sowie Daten mit Informationen über die Eigenschaften einer Parklücke an das Parkraumverwaltungssystem 100 zu senden.

Erfindungsgemäß ist das Fahrzeug F1 ferner dazu ausgebildet, erfasste Zustandsgrößen des Fahrzeugs F1 zur Ermittlung von Eigenschaften einer Parklücke, die in Abhängigkeit von den erfassten Zustandsgrößen ermittelt worden sind, an das Parkhausverwaltungssystem 100 zu übertragen, wobei das erste Fahrzeug F1 erfindungsgemäß dazu ausgebildet ist, wenigstens eine Eigenschaft einer Parklücke durch ein vorstehend bereits erwähntes, erfindungsgemäßes Verfahren zur Bestimmung wenigstens einer Eigenschaft einer Parklücke zu ermitteln.

Dazu weist das Fahrzeug F1 eine Auswerteeinrichtung zum Auswerten und Prüfen der erfassten Zustandsgrößen des Fahrzeugs F1 auf, insbesondere zum Prüfen, ob ein Fahrmanöver ein beendeter Parkvorgang ist, insbesondere ein erfolgreich beendeter Parkvorgang. Die Auswerteeinrichtung ist dabei dazu ausgebildet ein Fahrmanöver als erfolgreich beendeten Parkvorgang zu erkennen, wenn wenigstens eine, für einen beendeten Parkvorgang charakteristische, vordefinierte Bedingung erfüllt ist und falls ein erfolgreich beendeter Parkvorgang erkannt worden ist, eine oder mehrere Eigenschaften der Parklücke anhand der erfassten Fahrzustandsgrößen und/oder bereitgestellter Fahrzeugdaten zu ermitteln.

Darüber hinaus ist das erfindungsgemäß ausgebildete, erste Fahrzeug F1 dazu ausgebildet, eine Parklückensuchanfrage an das Parkraumverwaltungssystem 100 zu senden und Positionsdaten einer vom Parkraumverwaltungssystem 100 als geeignet ausgewählten Parklücke sowie ergänzende Informationen zu dieser Parklücke, beispielsweise eine vorteilhafte Einparktrajektorie, zu empfangen und mittels einer Anzeigevorrichtung im Fahrzeug darzustellen.

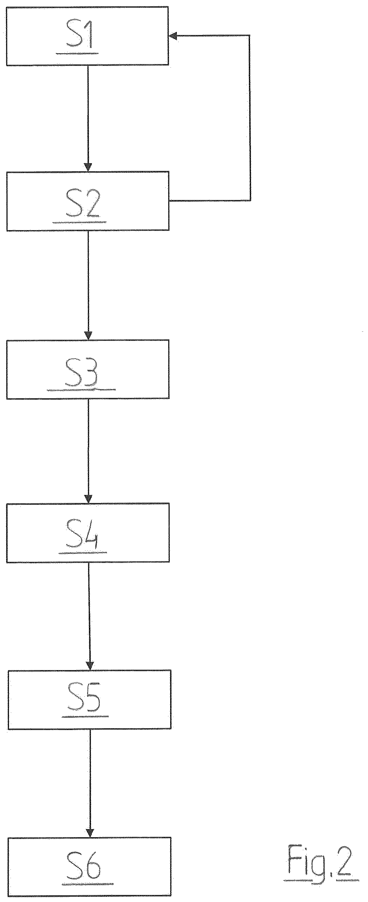

Fig. 2 zeigt zum besseren Verständnis ein beispielhaftes Ablaufschema eines erfindungsgemäßen Verfahrens zur Bestimmung wenigstens einer Eigenschaft einer Parklücke, wobei in einem ersten Schritt S1 ein oder mehrere Zustandsgrößen eines Fahrzeugs während eines Fahrmanövers mittels wenigstens einer Sensoreinrichtung des Fahrzeugs erfasst werden.

Im zweiten Schritt S2 werden die erfassten Zustandsgrößen mittels einer Auswerteeinrichtung ausgewertet und es wird geprüft, ob das Fahrmanöver ein beendeter Parkvorgang ist, insbesondere ein erfolgreich beendeter Parkvorgang, wobei das Fahrmanöver als beendeter Parkvorgang erkannt wird, wenn wenigstens eine, für einen beendeten Parkvorgang charakteristische vordefinierte Bedingung erfüllt ist.

Falls ein beendeter Parkvorgang erkannt worden ist, werden in einem dritten Schritt S3 eine oder mehrere Eigenschaften der Parklücke, für die das Ende eines Parkvorganges erkannt worden ist, anhand der erfassten Zustandsgrößen und/oder bereitgestellter Fahrzeugdaten des parkenden Fahrzeugs mittels der Auswerteeinrichtung bestimmt.

In einem weiteren, vierten Schritt S4, welcher bei einer anderen Ausgestaltung eines erfindungsgemäßen Verfahrens auch vor einem der Schritte S1 bis S3 erfolgen kann, wird die zugehörige Parklücke identifiziert, insbesondere mittels einer Identifikationseinrichtung, wobei dazu vorzugsweise eine Navigationseinrichtung verwendet wird, insbesondere die Navigationseinrichtung des parkenden Fahrzeugs. D.h. die Parklücke wird vorzugsweise mithilfe des grundsätzlich aus dem Stand der Technik bekannten GPS (Global Positioning System) identifiziert. Es ist aber auch denkbar, die Parklücke anderweitig zu identifizieren, insbesondere ihre Position anderweitig zu bestimmen, beispielsweise mit Hilfe von Adressangaben.

In einem fünften Schritt S5 eines erfindungsgemäßen Verfahrens zur Bestimmung wenigstens einer Eigenschaft einer Parklücke wird wenigstens eine der ermittelten Eigenschaften der identifizierten Parklücke zugeordnet.

Bei einer vorteilhaften Ausgestaltung eines erfindungsgemäßen Verfahrens, wie bei dem in Fig. 2 dargestellten Ablaufschema, wird in einem sechsten Schritt S6 wenigstens eine der ermittelten Eigenschaften für die identifizierte Parklücke im Parkraumverwaltungssystem 100 und/oder im Fahrzeug als Eigenschaft der identifizierten Parklücke hinterlegt

Ist in einem erfindungsgemäßen Parkraumverwaltungssystem 100 noch für keine der hinterlegten Parklücken eine erfindungsgemäß bestimmte Eigenschaft hinterlegt, wie im in Fig. 1a dargestellten, ersten Zustand des Netzwerkes, wobei dies durch die jeweils einfache Umrandung der Parklücken L1 bis L4 symbolisiert ist, kann ein erfindungsgemäßes Verfahren zur Unterstützung eines Fahrers eines Fahrzeugs beim Parken seines Fahrzeugs noch nicht ausgeführt werden. Dazu muss erst für wenigstens eine Parklücke L1 bis L4, eine Eigenschaft auf erfindungsgemäße Art und Weise bestimmt werden und im Parkraumverwaltungssystem 100 hinterlegt werden.

Stellt jedoch bereits in diesem ersten Zustand ein Fahrzeug, beispielsweise das Fahrzeug F1 eine Parklückensuchanfrage, wobei das Fahrzeug dazu mit dem Parklückensystem 100 in Kommunikationsverbindung steht, wählt das erfindungsgemäße Parkraumverwaltungssystem 100 aus dem erfassten Parklücken L1 bis L4 eine verfügbare freie und für das Fahrzeug F1 ausreichend große Parklücke L1 aus, wobei vorausgesetzt wird, dass das erfindungsgemäße Parkraumverwaltungssystem 100 Kenntnis davon hat welche der im Parkraumverwaltungssystem 100 hinterlegten Parklücken aktuell frei und damit verfügbar sind und welche der erfassten Parklücken aktuell belegt sind, und übermittelt die Positionsdaten dieser Parklücke L1 an das Parkplatzsuchende Fahrzeug F1.

Parkt das Fahrzeug F1 in dieser Parklücke L1 ein, wie in Fig. 1b dargestellt, werden während des Parkvorgangs mittels der im Fahrzeug F1 vorhandenen Sensoreinrichtungen Zustandsgrößen des Fahrzeugs F1 erfasst und zwischengespeichert, wobei in diesem Fall insbesondere Zustandsgrößen wie Fahrzeuggeschwindigkeit, Raddrehzahl, Lenkwinkel, Motormoment, Gierwinkel, Gangwahl, Zustand der Zündung, Zustand des Motors, Verriegelungszustand des Fahrzeugs, Sitzbelegung des Fahrersitzes sowie diverse weitere Zustandsgrößen erfasst werden.

Wird, wie in diesem Fall, anhand der erfassten Zustandsgrößen erkannt, dass ein Parkvorgang, in diesem Fall ein Einparkvorgang, erfolgreich beendet worden ist, was bei diesem erfindungsgemäßen Fahrzeug F1 erkannt wird, wenn das Fahrzeug bis in den Stillstand verzögert wird, sich für mehr als drei Minuten im Stillstand befindet und der Motor ausgeschaltet ist und das Fahrzeug von außen verriegelt wird, werden anhand der erfassten Zustandsdaten verschiedene Eigenschaften der Parklücke L1 ermittelt, in welche das Fahrzeug F1 gerade eingeparkt hat.

Dabei wird zum Beispiel ermittelt, insbesondere anhand des Motormomentes sowie einer Fahrzeuglängsneigung und einer Fahrzeugquerneigung sowie den Fahrzeugbeschleunigungen in allen drei Raumrichtungen, ob beim Einparken in die Parklücke L1 ein Bordstein überfahren worden ist.

Ferner wird aus wenigstens einer erfassten Raddrehzahl sowie dem Lenkwinkel zusammen mit einem hinterlegten Radumfang der Fahrweg T1 bzw. TE1 des Einparkvorgangs berechnet, insbesondere eine Einparktrajektorie T bzw. TE1, wobei in diesem Fall nur der Abschnitt der Trajektorie TE1 für die letztem 20 m vor der Endposition E bzw. dem erkannten Parkende endgültig gespeichert wird, nachdem der Parkvorgang als erfolgreich beendet erkannt worden ist.

Mittels der Einparktrajektorie TE1 wird ferner ermittelt, um was für eine Art von Parklücke L1 es sich handelt, insbesondere, ob es sich um eine Längsparklücke handelt, wie in diesem Fall, oder um eine Querparklücke oder um eine Fischgrätenparklücke oder eine sonstige Parklücke.

In einem nächsten Schritt (vgl. Schritt S4 aus Fig. 2) wird mithilfe der Navigationseinrichtung des Fahrzeugs F1 die Position des Fahrzeugs F1 und damit die Position der Parklücke L1 bestimmt, wodurch die Parklücke L1 eindeutig identifiziert werden kann.

Über die mit dem Parkraumverwaltungssystem 100 bestehende Kommunikationsverbindung wird die ermittelte Position der Parklücke L1 an das Parkraumverwaltungssystem 100 übertragen, in welchem geprüft wird, ob es sich bei der identifizierten Parklücke L1 um eine bereits hinterlegte Parklücke L1 handelt oder nicht.

Ist, wie in diesem Fall, die Parklücke L1 bereits hinterlegt, werden von dem Fahrzeug F1 die für die Parklücke L1 ermittelten Eigenschaften an das Parkraumverwaltungssystem 100 übertragen, wobei insbesondere aufgrund der Erkennung eines erfolgreich beendeten Parkvorgangs der identifizierten Parklücke L1 die Eigenschaft "zum Parken geeignet" zugeordnet wird und im Parkraumverwaltungssystem 100 hinterlegt wird, was durch die doppelte Umrandung der Parklücke L1 in Fig 1b symbolisch dargestellt ist.

Darüber hinaus werden der identifizierten Parklücke L1 die weiteren, vom erfindungsgemäß ausgebildeten Fahrzeug F1 ermittelten Eigenschaften, wie beispielsweise die ermittelte Trajektorie TE1, die Tatsache, dass keine Bordsteinüberfahrt beim Einparken erkannt worden ist sowie die Tatsache, dass die Parklücke L1 nun aktuell belegt ist, übermittelt und im Parkraumverwaltungssystem 100 hinterlegt.

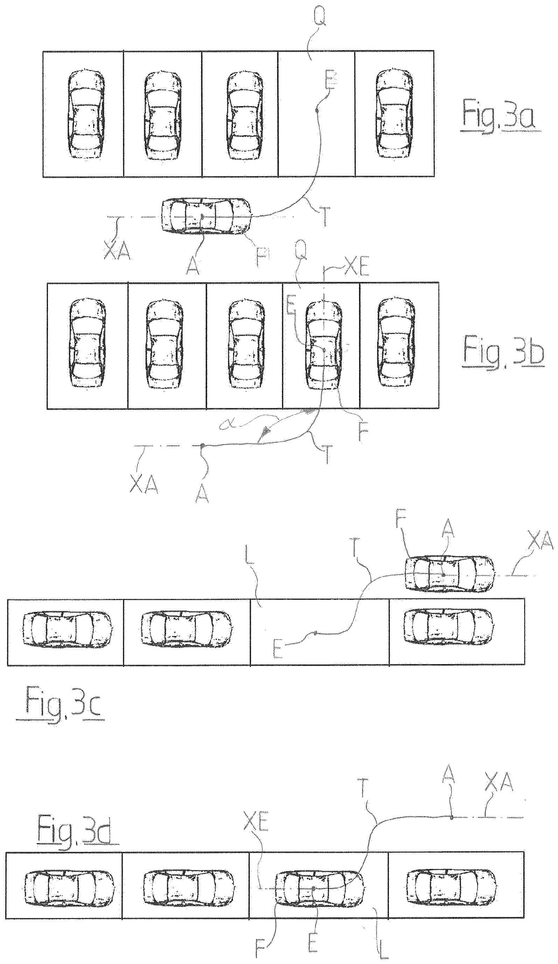

Wie vorstehend bereits erläutert worden ist, kann anhand der erfassten Trajektorie TE1 des Parkvorgangs die Art der Parklücke bestimmt werden, insbesondere ob es sich um eine Längsparklücke handelt, wie hier bei den Parklücken L1 bis L4, oder um eine Querparklücke oder um eine Fischgrätenparklücke oder eine sonstige Parklücke. Dies wird im Folgenden anhand der Fig. 3a bis 3d soll näher erläutert

Fig. 3a zeigt dazu eine Reihe mit Querparklücken Q vor dem Einparken eines Fahrzeugs F. In der Anfahrposition A der Parklücke Q, d.h. am Anfangsunkt der zum Einparken in die Parklücke Q erforderlichen Einparktrajektorie T befindet sich die Fahrzeuglängsachse XA senkrecht zur Längsrichtung der Querparklücke Q, während, wie anhand von Fig. 3b gut erkennbar ist, sich nach dem Einparken die Fahrzeuglängsachse XE in der Parkposition E bzw. am Endpunkt der Trajektorie T parallel zur Längsrichtung der Querparklücke Q erstreckt und insbesondere in einem Winkel von 90° zu r Fahrzeuglängsachse XA am Anfangspunkt A vor dem Einparkvorgang verläuft.

Die Fahrzeuglängsachsen XA und XE am Anfangspunkt A bzw.am Endpunkt E der Einparktrajektorie T bilden dabei jeweils die Tangenten zum Anfangspunkt A bzw. zum Endpunkt E der zugehörigen Trajektorie T, wobei der Winkel zwischen ihnen einen sogenannten Anfahrtwinkel a definiert, aus welchem sich ableiten lässt, um was für eine Art von Parklücke es sich handelt.

Wie anhand von Fig. 3a und 3b gut erkennbar ist für Querparklücken Q ein Anfahrtwinkel a um die 90°charakteristisch, während, wie anhand der Fig. 3c und 3d erkennbar ist, bei Längsparklücken L jeweils ein Anfahrtwinkel a von etwa 180°bzw. 0°zwischen der Fahrzeuglängsachse XA am Anfangspunkt A und der Fahrzeuglängsachse XE im Endpunkt E bzw. in der Parkposition E charakteristisch ist.

Hat das erste Fahrzeug F1 aus den Fig. 1a und 1b seine Parklücke L1 verlassen und wurde ein erfolgreicher Ausparkvorgang erkannt, welcher in diesem Fall erkannt wird, wenn nach dem Starten des Motors innerhalb eines ersten definierten Zeitraumes das Fahrzeug F1 aus dem Stillstand anfährt und innerhalb eines zweiten definierten Zeitraumes einen vordefinierten Parkende-Geschwindigkeitsschwellenwert überschreitet, wird die Parklücke L1, in welcher das Fahrzeug F1 geparkt hat, erneut identifiziert und der Parklücke L1 aufgrund der erfassten Zustandsgrößen des Fahrzeugs die Eigenschaft "frei" zugeordnet und im Parkraumverwaltungssystem 100 hinterlegt.

Aufgrund der Tatsache, dass dieser Parklücke L1 aufgrund des erfolgreich beendeten Einparkvorgangs des ersten Fahrzeugs F1 zuvor die Eigenschaft "zum Parken geeignet", insbesondere in Verbindung mit den zugehörigen Fahrzeugdaten zugewiesen worden ist, ist die Parklücke L1 als geeignet zum Parken für ein Fahrzeug mit einer vergleichbaren Größe und vom gleichen Typ klassifiziert, vorliegend insbesondere als geeignet für einen PKW der Mittelklasse mit durchschnittlicher Bodenfreiheit, was weiterhin mit der doppelten Umrandung der Parklücke L1 symbolisiert sein soll.

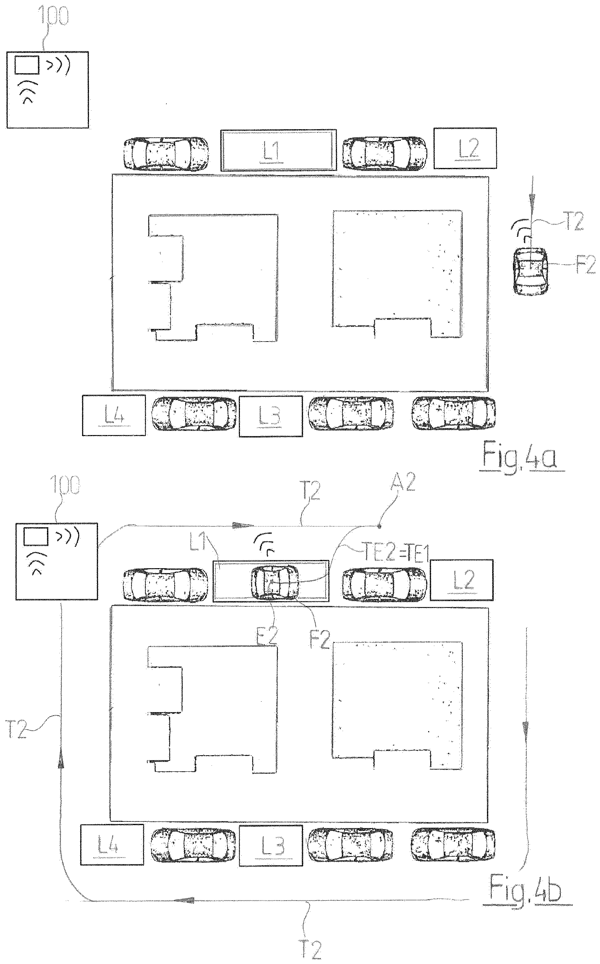

Bei einer Parklückensuchanfrage eines zweiten Fahrzeugs F2, das nicht größer ist als der erste Fahrzeug F1 und vom Typ mit dem ersten Fahrzeug F1 vergleichbar ist, wie in Fig. 4a beispielshaft dargestellt, wird vom Parkraumveraltungssystem 100 bevorzugt die Parklücke L1 als geeignete Parklücke ausgewählt, weil dies durch das erste Fahrzeug F1 bereits als "gültig" bzw. als "zum Parken geeignet" bestätigt worden ist im Gegensatz zu den übrigen Parklücken L2 bis L4.

Da das zweite Fahrzeug F2 darüber hinaus keine weiteren Besonderheiten gegenüber dem ersten Fahrzeug F1 aufweist weist das erfindungsgemäße Parkraumverwaltungssystem 100 bei einer Parklückensuchanfrage seitens des zweiten Fahrzeugs F2 die Parklücke L1 dem zweiten Fahrzeug F2 zu und übermittelt die Positionsdaten der Parklücke L1 an das zweite Fahrzeug, damit es dort parken kann, während die anderen drei Parklücken L2 bis L4 dem zweiten Fahrzeug F2 nicht vorgeschlagen werden, da für diese noch keine Bestätigung im erfindungsgemäßen Parkraumverwaltungssystem 100 hinterlegt ist, dass sie sich tatsächlich zum Parken eignen, insbesondere für ein Fahrzeug von der Art des zweiten Fahrzeugs F2.

Neben den Positionsdaten der Parklücke L1 wird dem zweiten Fahrzeug F2 dabei die der Parklücke L1 zugeordnete und im Parkraumverwaltungssytem 100 hinterlegte Einparktrajektorie TE1 übermittelt, um den Fahrer des zweiten Fahrzeugs F2 möglichst optimal zu unterstützen, wobei diese zusammen mit den Positionsdaten im zweiten Fahrzeug F2 angezeigt werden kann.

Parkt das zweite Fahrzeug F2 nun in der Parklücke L1 ein und ist ebenfalls erfindungsgemäß ausgebildet, kann vom zweiten Fahrzeug F2 ebenfalls das erfolgreiche Beenden eines Parkvorgangs erkannt werden und insbesondere werden auch von diesem Fahrzeug F2 Eigenschaften der Parklücke ermittelt und an das erfindungsgemäße Parkraumverwaltungssystem 100 übertragen und für die identifizierte Parklücke L1 hinterlegt, so dass nun von zwei Fahrzeugen Eigenschaften für die Parklücke L1 im Parkraumverwaltungssystem 100 hinterlegt sind.

Da das zweite Fahrzeug F2 nicht über ein Parkassistenzsystem verfügt, parkt der Fahrer des zweiten Fahrzeugs F2 manuell ein. Dabei wird vom zweiten Fahrzeug F2 aus den während des Parkvorgangs erfassten Zustandsgrößen eine zweite Trajektorie T2 berechnet, von der wiederum nur der letzte Abschnitt TE2 vor dem erfolgreichen Beenden des Parkvorgangs TE2 endgültig gespeichert und der identifizierten Parklücke L1 zugeordnet wird, wobei sich diese Trajektorie aufgrund des manuellen Einparkvorgangs naturgemäß von der ersten Trajektorie TE1, entlang welcher das erste Fahrzeug F1 in die Parklücke L1 eingeparkt hat, unterscheidet, siehe Fig. 4b.

Somit sind nun für die Parklücke L1 zwei Einparktrajektorien TE1 und TE2 hinterlegt. Aus diesen kann das erfindungsgemäße Parkraumverwaltungssystem 100 mittels statistischer Auswertungen eine besonders vorteilhafte Trajektorie für weitere, parklückensuchende Fahrzeuge berechnen, welche an Fahrzeuge, denen die Parklücke L1 als geeignete Parklücke zugewiesen wird, zusammen mit den Positionsdaten der Parklücke L1 übermittelt werden kann, um den Fahrer des weiteren parklückensuchenden Fahrzeugs beim Einparken bestmöglich zu unterstützen.

Weist ein parkplatzsuchendes Fahrzeug dabei eine Parkassistenzvorrichtung auf, kann die zu einer als geeignet ausgewählten Parklücke hinterlegten Trajektorie auch als Input, insbesondere als Fahrwegvorgabe, für das Parkassistenzsystem genutzt werden und somit auf besonders einfache Art und Weise eingeparkt werden.

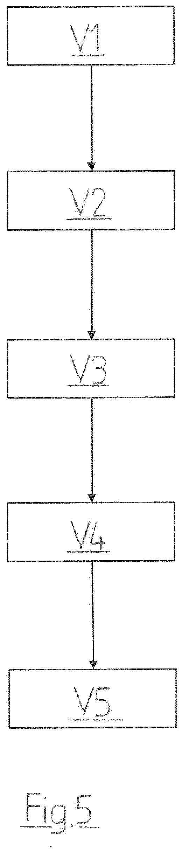

Fig. 5 zeigt der Vollständigkeit halber ein Ablaufschema eines erfindungsgemäßen Verfahrens zur Unterstützung eines Fahrers eines Fahrzeugs beim Parken seines Fahrzeugs mithilfe eines erfindungsgemäßen Parkraumverwaltungssystems 100.

In einem ersten Schritt V1 wird dabei eine Kommunikationsverbindung zwischen einem parklückensuchenden Fahrzeug und/oder einem Mobilgerät mit dem erfindungsgemäß ausgebildeten Parkraumverwaltungssystem 100 aufgebaut.

In einem zweiten Schritt V2 wird eine Parklückenanfrage von dem parklückensuchenden Fahrzeug F2 oder dem Mobilgerät an das Parkraumverwaltungssystem 100 gesendet, insbesondere in Verbindung mit Fahrzeugdaten des parklückensuchenden Fahrzeugs an das Parkraumverwaltungssystem 100 und/oder mit definierten Suchkriterien, um somit eine optimale Auswahl einer geeigneten Parklücke aus den hinterlegten Parklücken L1 bis L4 zu ermöglichen, wobei in einem dritten Schritt V3 die Parklückensuchanfrage durch das Parkraumverwaltungssystem 100 empfangen wird.

Anschließend, insbesondere in einem vierten Schritt V4, wird für das parklückensuchende Fahrzeug F2 aus dem im Parkraumverwaltungssystem 100 hinterlegten Parklücken L1 bis L4 anhand der, den Parklücken L1 bis L4 zugeordneten und hinterlegten Eigenschaften, eine Parklücke als geeignet ausgewählt, wobei wenigstens für eine der hinterlegten Parklücken L1 bis L4 eine Eigenschaft durch ein erfindungsgemäßes Verfahren bestimmt worden ist und hinterlegt worden ist.

In einem fünften Schritt V5 wird schließlich die Position der als geeignet ausgewählten Parklücke an das parklückensuchende Fahrzeug F2 oder das Mobilgerät übermittelt.

Zusätzlich zu den Positionsdaten der als geeignet ausgewählten Parklücke können noch weitere Informationen über die Parklücke übermittelt werden, beispielsweise bestimmte Eigenschaften oder dergleichen. Des Weiteren kann die Parklückensuchanfrage bereits bestimmte Suchkriterien enthalten, so dass beispielsweise nur nach Parklücken gesucht wird, welche Querparklücken sind oder in welche nur vorwärts eingeparkt werden soll.

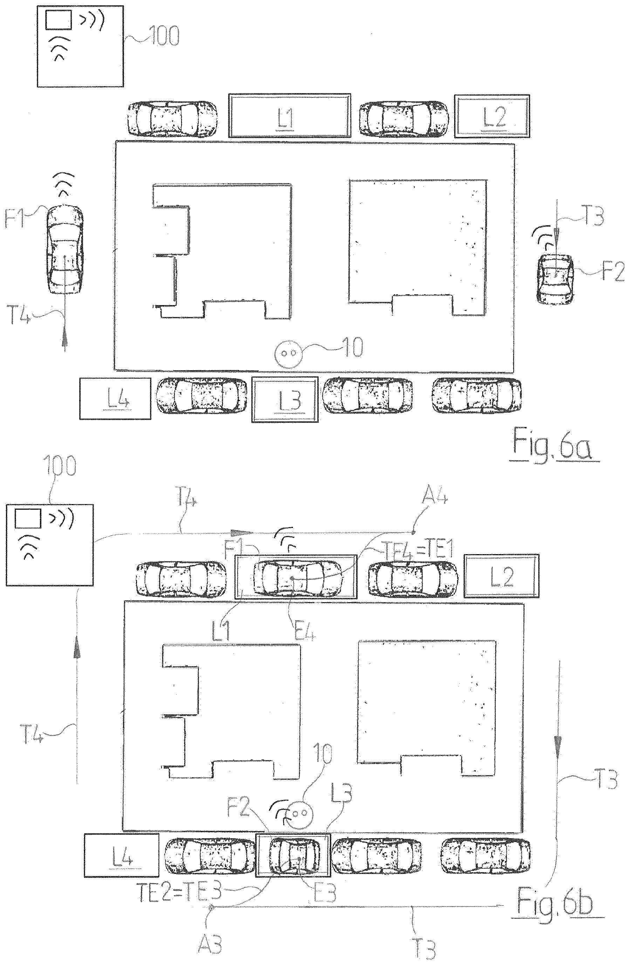

Die Vorteile der Erfindung werden insbesondere anhand der Fig. 6a und 6b deutlich, welche das Netzwerk aus den vorangegangenen Fig. 1a, 1b, 4a und 4b zeigen, jedoch in einem Zustand, in welchem sowohl die Parklücke L1, als auch die Parklücke L3 bereits als zum Parken geeignet bestätigt worden sind, wobei die Parklücke L1 für Fahrzeuge der Größenordnung des ersten Fahrzeugs F1 als zum Parken geeignet bestätigt worden ist und die Parklücke L3 für Fahrzeuge der Größenordnung des zweiten Fahrzeugs F2.

Ferner ist an der Parklücke L3 eine Ladestation 10 vorhanden, so dass die Parklücke L3 insbesondere zum Laden von Elektrofahrzeugen geeignet ist. Diese Eigenschaft wurde auch bereits nach einem erfolgreich beendeten Parkvorgang von einem weiteren, hier nicht dargestellten Elektrofahrzeug, welches in der Parklücke L3 erfolgreich geparkt hat und dort an die Ladestation 10 angeschlossen worden ist, was mittels einer Sensoreinrichtung im Fahrzeug erkannt worden ist, im Parkraumverwaltungssystem 100 als Eigenschaft der Parklücke L3 hinterlegt.

Werden nun von zwei Fahrzeugen, wie hier anhand von Fig. 6a und 6b symbolisch durch das erste Fahrzeug F1 und das zweite Fahrzeug F2 dargestellt, jeweils Parklückensuchanfragen gestellt, wobei vom zweiten Fahrzeug F2 eine Parklückensuchanfrage gestellt worden ist mittels derer gezielt nach Parklücken mit Ladestation 10 gesucht wird, wählt das erfindungsgemäße Parkraumverwaltungssystem 100 für das erste Fahrzeug F1 die Parklücke L1 aus und weist ihm diese zu und übermittelt die entsprechenden Positionsdaten der Parklücke L1 sowie die zugehörige vorteilhafte Einparktrajektorie TE1 und weist dem zweiten Fahrzeug F2 die Parklücke L3 zu und die zugehörige, besonders vorteilhafte Einparktrajektorie TE2 zu.

Da das erste Fahrzeug F1 über eine Parkassistenzvorrichtung verfügt und insbesondere autonom einparken kann, wird die vom Parkraumverwaltungssystem 100 übermittelte Einparktrajektorie TE1 beim ersten Fahrzeug F1 an die Parkassistenzvorrichtung übermittelt und mithilfe der vom Parkraumverwaltungssystem 100 zur Verfügung gestellten Trajektorie TE1 parkt das erste Fahrzeug F1 autonom in die Parklücke L1 ein. Aus den während des Einparkvorgangs erfassten Zustandsgrößen des Fahrzeugs F1 wird nach dem Erkennen eines erfolgreich beendeten Parkvorgangs aus den zwischengespeicherten Zustandsgrößen des Fahrzeugs F1 ermittelt, dass das Fahrzeug autonom in die Parklücke L1 eingeparkt hat und dies als weitere Eigenschaft der hinterlegten im Parkraumverwaltungssystem 100 die Parklücke L1 zugeordnet und für diese hinterlegt. Ebenso die aus den Zustandsgrößen des ersten Fahrzeugs F1 berechnete Trajektorie TE4.

Das zweite Fahrzeug F2 wird manuell eingeparkt, was ebenfalls als Eigenschaft der Parklücke L3 erkannt wird und der Parklücke L3 zugeordnet und zu dieser im Parkraumverwaltungssystem 100 hinterlegt wird.

Aus den während des Einparkvorgangs erfassten Zustandsgrößen des Fahrzeugs F2 wird ebenfalls die aus den Zustandsgrößen des zweiten Fahrzeugs F2 berechnete Trajektorie TE3 berechnet und für die Parklücke L3 hinterlegt.

Bei der Ausgestaltung eines erfindungsgemäßen Parkraumverwaltungssystems und eines erfindungsgemäßen Fahrzeugs sowie bei der Durchführung der erfindungsgemäßen Verfahren ist jeweils eine Vielzahl an Abwandlungen möglich, ohne den Inhalt der Patentansprüche zu verlassen. Insbesondere können die einzelnen Verfahrensschritte, sofern dies technisch sinnvoll ist und einen logischen Aufbau ergibt, in ihrer Reihenfolge vertauscht sein.

Ferner können einzelne Komponenten eines erfindungsgemäßen Parkraumverwaltungssystems und/oder eines erfindungsgemäßen Fahrzeugs dabei grundsätzlich dem Parkraumverwaltungssystem und/oder einem erfindungsgemäßen Fahrzeug zugeordnet sein. Insbesondere können mit der Hinterlegung von Eigenschaften zu Parklücken im Fahrzeug, d.h. mit einer lokalen Hinterlegung besonders vorteilhaft die bevorzugten, von diesem Fahrzeug bereits angefahrenen Parklücken hinterlegt werden, wodurch bereits eine gute Unterstützung des Fahrers erreicht werden kann, insbesondere, wenn jeweils erfasste Trajektorien der Parkvorgänge hinterlegt werden. Dadurch kann vor allem eine sehr fahrer- bzw. fahrzeugspezifische Unterstützung erreicht werden.

### Bezuaszeichenliste:

- 10: Ladestation
- 100: erfindungsgemäßes Parkraumverwaltungssystem

- A, A1-A4: Anfangspunkt
- E, E1-E4: Endpunkt
- F1: erstes erfindungsgemäßes Fahrzeug
- F2: zweites erfindungsgemäßes Fahrzeug

- L: Längsparklücke
- L1-L4: im Parkraumverwaltungssystem hinterlegte Parklücke
- Q: Querparklücke
- S1-S6: Verfahrensschritte eines erfindungsgemäßen Verfahrens zum Bestimmen wenigstens einer Eigenschaft einer Parklücke
- T1-T4: zwischengespeicherte Trajektorie eines Fahrzeugs
- T, TE1-TE4: zu einer Parklücke hinterlegte Trajektorie eines Parkvorgangs
- V1-V5: Verfahrensschritte eines erfindungsgemäßen Verfahrens zum Unterstützen eines Fahrers beim Parken seines Fahrzeugs

- XA: Fahrzeuglängsrichtung im Anfangspunkt
- XE: Fahrzeuglängsrichtung im Endpunkt

- α: Anfahrtwinkel

## Patentansprüche

1. Verfahren zur Bestimmung wenigstens einer Eigenschaft einer in einem Parkraumverwaltungssystem (100) und/oder in einem Fahrzeug hinterlegten oder zu hinterlegenden Parklücke (L1, L2, L3, L4) für ein Fahrzeug (F, F1, F2), **gekennzeichnet durch** die Schritte:
- Erfassen einer oder mehrerer Zustandsgrößen eines Fahrzeugs (F, F1, F2) während eines Fahrmanövers mittels wenigstens einer Sensoreinrichtung des Fahrzeugs,
- Auswerten der erfassten Zustandsgrößen des Fahrzeugs und Prüfen mittels einer Auswerteeinrichtung, ob das Fahrmanöver ein beendeter Parkvorgang ist, wobei das Fahrmanöver als beendeter Parkvorgang erkannt wird, wenn wenigstens eine, für einen beendeten Parkvorgang charakteristische, vordefinierte Bedingung erfüllt ist, und falls ein beendeter Parkvorgang erkannt worden ist,
- Ermitteln einer oder mehrerer Eigenschaften der Parklücke (L1, L2, L3, L4) anhand der erfassten Fahrzustandsgrößen und/oder bereitgestellter Fahrzeugdaten des Fahrzeugs (F, F1, F2) mittels der Auswerteinrichtung,
- Identifizieren der Parklücke (L1, L2, L3, L4) mittels einer Identifikationseinrichtung, und
- Zuordnen wenigstens einer der ermittelten Eigenschaften der Parklücke (L1, L2, L3, L4) zu der identifizierten Parklücke (L1, L2, L3, L4).

2. Verfahren nach Anspruch 1, **dadurch gekennzeichnet, dass** wenigstens eine der ermittelten Eigenschaften für die identifizierte Parklücke (L1, L2, L3, L4) im Parkraumverwaltungssystem (100) und/oder im Fahrzeug als Eigenschaft der identifizierten Parklücke (L1, L2, L3, L4) hinterlegt wird.

3. Verfahren nach Anspruch 1 oder 2, **dadurch gekennzeichnet, dass** anhand der erfassten Zustandsgrößen geprüft wird, ob der Parkvorgang erfolgreich beendet worden ist, wobei, falls der Parkvorgang als erfolgreich beendet erkannt worden ist, der zugehörigen, identifizierten Parklücke (L1, L2, L3, L4) die Eigenschaft "zum Parken geeignet" zugeordnet wird, vorzugsweise jeweils in Verbindung mit bereitgestellten Fahrzeugdaten von dem Fahrzeug (F, F1, F2), mit welchem der Parkvorgang durchgeführt worden ist, insbesondere mit Fahrzeugdaten, welche Informationen über die Art und/oder Größe des Fahrzeugs)F1, F2) enthalten.

4. Verfahren nach wenigstens einem der vorgenannten Ansprüche, insbesondere nach Anspruch 3, **dadurch gekennzeichnet, dass** ein Parkvorgang als erfolgreich beendet erkannt wird, insbesondere als ein erfolgreich beendeter Einparkvorgang, wenn die Auswertung der erfassten Zustandsgrößen ergibt, dass sich das Fahrzeug (F, F1, F2) im Stillstand befindet, vorzugsweise seit einem definierten Zeitraum, insbesondere seit wenigstens drei Minuten, und/oder der Motor ausgeschaltet ist und/oder die Zündung ausgeschaltet ist und/oder der Fahrergurt gelöst worden ist und/oder der Fahrersitz nicht mehr als belegt erkannt wird und/oder eine Bluetooth-Verbindung zwischen dem Fahrzeug (F, F1, F2) und einem Mobiltelefon getrennt worden ist und/oder sich der Fahrzeugschlüssel außerhalb des Fahrzeugs (F, F1, F2) befindet und/oder das Fahrzeug (F, F1, F2) an eine Ladestation (10) angeschlossen worden ist und/oder das Fahrzeug (F, F1, F2) von außen verriegelt worden ist.

5. Verfahren nach wenigstens einem der vorgenannten Ansprüche, **dadurch gekennzeichnet, dass** aus den während des Fahrmanövers erfassten Zustandsgrößen eine Trajektorie (T, T1, T2, T3, T4) des Fahrzeugs berechnet wird, wobei die berechnete Trajektorie (T, T1, T2, T3, T4) vorzugsweise in einem Zwischenspeicher abgelegt wird, insbesondere deren Verlauf über der Zeit, wobei die berechnete Trajektorie (T, T1, T2, T3, T4) vorzugsweise wenigstens zwischengespeichert wird, bis ein erfolgreich beendeter Parkvorgang erkannt worden ist.

6. Verfahren nach Anspruch 5, **dadurch gekennzeichnet, dass**, falls ein Parkvorgang als erfolgreich beendet erkannt worden ist, die für eine definierte Strecke unmittelbar vor dem Erreichen einer Parkposition und/oder die für einen definierten Zeitraum unmittelbar vor dem Ende dieses Parkvorgangs und/oder die in einem Zeitraum ab einem bestimmten Ereignis bis zum Ende des Parkvorgangs aus den während des Fahrmanövers erfassten Zustandsgrößen berechnete Trajektorie (T, TE1, TE2, TE3, TE4) der identifizierten Parklücke (L1, L2, L3, L4) zugeordnet wird und vorzugsweise für die identifizierte Parklücke (L1, L2, L3, L4) hinterlegt wird.

7. Verfahren nach Anspruch 6, **dadurch gekennzeichnet, dass** anhand der der identifizierten Parklücke (L1, L2, L3, L4) zugeordneten Trajektorie (T, TE1, TE2, TE3, TE4) bestimmt wird, um was für eine Art von Parklücke (L1, L2, L3, L4) es sich handelt, insbesondere, ob die identifizierte Parklücke (L1, L2, L3, L4) eine Längsparklücke (L), eine Querparklücke (Q), eine Fischgrätenparklücke oder eine sonstige Parklücke ist, wobei vorzugsweise das Ergebnis der identifizierten Parklücke (L1, L2, L3, L4) zugeordnet wird und(insbesondere im Parkraumverwaltungssystem (100) und/oder im Fahrzeug für die identifizierte Parklücke (L1, L2, L3, L4) hinterlegt wird.

8. Verfahren nach Anspruch 7, **dadurch gekennzeichnet, dass** die Bestimmung der Art der Parklücke (L1, L2, L3, L4) wenigstens in Abhängigkeit vom Verlauf der Trajektorie (T, TE1, TE2, TE3, TE4) und/oder in Abhängigkeit eines Anfahrtwinkels (α) erfolgt, wobei der Anfahrtwinkel (α) der Winkel zwischen der Fahrzeuglängsrichtung (XA) des Fahrzeugs (F!, F2) zu Beginn der Anfahrt (A, A1, A2, A3, A4) der Parklücke (L1, L2, L3, L4) und der Fahrzeuglängsrichtung (XE) am Ende eines erfolgreichen Parkvorgangs ist.

9. Verfahren nach wenigstens einem der vorgenannten Ansprüche, dass anhand der der erfassten Zustandsgrößen des Fahrzeugs (F, F1, F2) geprüft wird, insbesondere anhand der für eine definierte Strecke unmittelbar vor dem Erreichen einer Parkposition (E, E1, E2, E3, E4) und/oder der für einen definierten Zeitraum unmittelbar vor dem Ende des Parkvorgangs und/oder der in einem Zeitraum ab einem bestimmten Ereignis bis zum Ende des Parkvorgangs erfassten Zustandsgrößen, ob im Bereich der Parklücke (L1, L2, L3, L4) ein Bordstein vorhanden ist, wobei vorzugsweise, falls ein Bordstein als vorhanden erkannt wird, geprüft wird, ob der Bordstein die Parklücke (L1, L2, L3, L4) begrenzt und/oder überfahrbar ist.

10. Verfahren nach Anspruch 9, dass zur Prüfung, ob eine Parklücke (L1, L2, L3, L4) einen Bordstein aufweist, wenigstens ein Motormoment des Fahrzeugs und/oder eine Fahrzeuglängsneigung und/oder eine Fahrzeugquerneigung und/oder eine Fahrzeugbeschleunigung in wenigstens einer Raumrichtung erfasst und ausgewertet werden.

11. Verfahren nach wenigstens einem der vorgenannten Ansprüche; **dadurch gekennzeichnet, dass** die Parklücke (L1, L2, L3, L4) nur identifiziert wird und/oder eine oder mehrere Eigenschaften der Parklücke (L1, L2, L3, L4) anhand der erfassten Fahrzustandsgrößen und/oder bereitgestellter Fahrzeugdaten nur ermittelt werden und/oder wenigstens eine ermittelte Eigenschaften der Parklücke (L1, L2, L3, L4) der identifizierten Parklücke (L1, L2, L3, L4) nur zugeordnet werden und/oder wenigstens eine ermittelte Eigenschaften für die identifizierte Parklücke (L1, L2, L3, L4) im Parkraumverwaltungssystem (100) und/oder im Fahrzeug nur hinterlegt wird, wenn der Parkvorgang als erfolgreich beendet erkannt worden ist.

12. Parkraumverwaltungssystem, wobei das Parkraumverwaltungssystem (100) eine Entscheidungseinrichtung zum Auswählen einer geeigneten Parklücke (L1, L2, L3, L4) aus einer Vielzahl an hinterlegten Parklücken (L1, L2, L3, L4) für ein Fahrzeug, eine Speichervorrichtung zum Hinterlegen von Informationen zu erfassten Parklücken (L1, L2, L3, L4) sowie Kommunikationsmittel zum Bereitstellen einer Kommunikationsverbindung mit wenigstens einem Fahrzeug (F, F1, F2) und/oder einem Mobilgerät aufweist,
wobei das Parkraumverwaltungssystem (100) dazu eingerichtet ist, wenigstens von einem Fahrzeug (F, F1, F2) Positionsdaten von existierenden Parklücken (L1, L2, L3, L4) sowie Daten mit Informationen über die Eigenschaften der Parklücken (L1, L2, L3, L4) zu empfangen und in der Speichervorrichtung derart zu hinterlegen, dass die Eigenschaften den Parklücken (L1, L2, L3, L4) zugeordnet hinterlegt sind,
wobei das Parkraumverwaltungssystem (100) dazu eingerichtet ist, von wenigstens von einem Fahrzeug (F, F1, F2) und/oder einem Mobilgerät eine Parklückensuchanfrage für das Fahrzeug (F, F1, F2) zu empfangen,
und wobei das Parkraumverwaltungssystem (100) dazu eingerichtet ist, auf eine Parklückensuchanfrage hin, aus den hinterlegten Parklücken (L1, L2, L3, L4) eine für das parklückensuchende Fahrzeug (F, F1, F2) geeignete, insbesondere eine geeignete und freie Parklücke (L1, L2, L3, L4) auszuwählen und die Position der Parklücke (L1, L2, L3, L4) an das Fahrzeug (F, F1, F2) und/oder das Mobilgerät zu übermitteln,
**dadurch gekennzeichnet, dass** die Entscheidungseinrichtung des Parkraumverwaltungssystems (100) dazu ausgebildet ist, die Eignung einer Parklücke (L1, L2, L3, L4) für das parklückensuchende Fahrzeug (F, F1, F2) in Abhängigkeit wenigstens einer Eigenschaft zu bestimmen, die durch ein Verfahren nach wenigstens einem der Ansprüche 1 bis 11 bestimmt worden ist und im Parkraumverwaltungssystem (100) hinterlegt worden ist.

13. Parkraumverwaltungssystem (100) nach Anspruch 12, **dadurch gekennzeichnet, dass** das Parkraumverwaltungssystem (100) dazu ausgebildet ist, aus mehreren, derselben Parklücke (L1, L2, L3, L4) zugeordneten, für diese Parklücke (L1, L2, L3, L4) hinterlegten, insbesondere durch ein Verfahren nach wenigstens einem der Ansprüche 1 bis 11 ermittelten Eigenschaften, eine oder mehrere weitere Eigenschaften für diese Parklücke (L1, L2, L3, L4) zu ermitteln, insbesondere mithilfe statistischer Auswertungen.

14. Parkraumverwaltungssystem (100) nach Anspruch 12 oder 13, **dadurch gekennzeichnet, dass** das Parkraumverwaltungssystem (100) dazu ausgebildet ist, anhand wenigstens einer, einer Parklücke (L1, L2, L3, L4) zugeordneten und im Parkraumverwaltungssystem (100) für diese Parklücke (L1, L2, L3, L4) hinterlegten Trajektorie (T, TE1, TE", TE3, TE4) zu bestimmen, um was für eine Art von Parklücke (L1, L2, L3, L4) es sich handelt, insbesondere, ob diese Parklücke (L1, L2, L3, L4) eine Längsparklücke (L), eine Querparklücke (Q), eine Fischgrätenparklücke oder eine sonstige Parklücke ist, und vorzugsweise das Ergebnis dieser Parklücke (L1, L2, L3, L4) zuzuordnen und insbesondere im Parkraumverwaltungssystem (100) zu hinterlegen.

15. Parkraumverwaltungssystem (100) nach wenigstens einem der Ansprüche 12 bis 14, **dadurch gekennzeichnet, dass** das Parkraumverwaltungssystem (100) dazu ausgebildet ist, aus mehreren, derselben Parklücke (L1, L2, L3, L4) zugeordneten, hinterlegten Trajektorien (T, TE1, TE2, TE3, TE4) eine vorteilhafte Trajektorie (T, TE1, TE2, TE3, TE4) zu ermitteln, insbesondere eine vorteilhafte Einparktrajektorie (T, TE1, TE2, TE3, TE4), wobei das Parkraumverwaltungssystem (100) vorzugsweise dazu ausgebildet ist, die vorteilhafte Trajektorie (T, TE1, TE2, TE3, TE4) der als geeignet ausgewählten Parklücke (L1, L2, L3, L4) an das parklückensuchende Fahrzeug (F, F1, F2) zu übermitteln, insbesondere zusammen mit den Positionsdaten der als geeignet ausgewählten Parklücke (L1, L2, L3, L4).

16. Verfahren zur Unterstützung eines Fahrers eines Fahrzeugs (F, F1, F2) beim Parken seines Fahrzeugs (F, F1, F2) mithilfe eines Parkraumverwaltungssystems (100), welches dazu eingerichtet ist, wenigstens von einem ersten Fahrzeug (F1) Positionsdaten von existierenden Parklücken (L1, L2, L3, L4) sowie Daten mit Informationen über Eigenschaften der Parklücken (L1, L2, L3, L4) zu empfangen und in einer Speichervorrichtung derart zu hinterlegen, dass die Eigenschaften den Parklücken (L1, L2, L3, L4) zugeordnet hinterlegt sind, wobei das Parkraumverwaltungssystem (100) weiter dazu eingerichtet ist von einem parklückensuchenden zweiten Fahrzeug (F2) und/oder einem Mobilgerät eine Parklückensuchanfrage zu empfangen, und wobei das Parkraumverwaltungssystem (100) dazu eingerichtet ist, auf eine Parklückensuchanfrage hin, aus den hinterlegten Parklücken (L1, L2, L3, L4) eine für ein parklückensuchendes Fahrzeug (F2) geeignete Parklücke (L1, L3) auszuwählen und die Position der Parklücke (L1, L3) an das parklückensuchende, zweite Fahrzeug (F2) und/oder das Mobilgerät zu übermitteln, **gekennzeichnet durch** die Schritte:
- Aufbauen einer Kommunikationsverbindung zwischen einem parklückensuchenden Fahrzeug (F2) und/oder einem Mobilgerät mit einem gemäß den Ansprüchen 12 bis 15 ausgebildeten Parkraumverwaltungssystem (100),
- Senden einer Parklückenanfrage an das Parkraumverwaltungssystem (100), insbesondere in Verbindung mit Fahrzeugdaten des parklückensuchenden Fahrzeugs (F2) an das Parkraumverwaltungssystem (100),
- Empfangen der Parklückensuchanfrage durch das Parkraumverwaltungssystem (100),
- Auswählen einer geeigneten Parklücke (L1, L3) für das parklückensuchende Fahrzeug (F2) aus den im Parkraumverwaltungssystem (100) hinterlegten Parklücken (L1, L2, L3, L4) anhand der den hinterlegten Parklücken (L1, L2, L3, L4) zugeordneten und hinterlegten Eigenschaften, wobei wenigstens für eine Parklücke (L1, L2, L3, L4), aus denen eine geeignete Parklücke (L1, L3) ausgewählt wird, eine Eigenschaft durch ein Verfahren nach wenigstens einem der Ansprüche 1 bis 11 bestimmt worden und hinterlegt ist, und
- Übermitteln der Position der geeigneten Parklücke (L1, L3) an das parklückensuchende Fahrzeug (F2) und/oder das Mobilgerät.

17. Verfahren nach Anspruch 16, **dadurch gekennzeichnet, dass**, insbesondere vor dem Auswählen einer geeigneten Parklücke (L1, L3), aus mehreren, derselben Parklücke (L1, L3) zugeordneten, für diese Parklücke (L1, L3) hinterlegten, insbesondere durch ein Verfahren nach wenigstens einem der Ansprüche 1 bis 11 ermittelten Eigenschaften, eine oder mehrere weitere Eigenschaften dieser Parklücke (L1, L3) ermittelt und hinterlegt werden, insbesondere mithilfe statistischer Auswertungen, wobei die auf diese Weise ermittelten, weiteren Eigenschaften bei der Auswahl der geeigneten Parklücke (L1, L3) vorzugsweise ebenfalls berücksichtigt werden.

18. Verfahren nach Anspruch 16 oder 17, **dadurch gekennzeichnet, dass**, insbesondere vor dem Auswählen einer geeigneten Parklücke (L1, L3), aus mehreren, derselben Parklücke (L1, L3) zugeordneten, den für diese Parklücke (L1, L3) ermittelten und hinterlegten Trajektorien (TE1, TE2, TE3, TE4) eine vorteilhafte Trajektorie (TE1, TE2, TE3, TE4) für diese Parklücke (L1, L3) ermittelt und hinterlegt wird, insbesondere eine vorteilhafte Einparktrajektorie (TE1, TE2, TE3, TE4).

19. Verfahren nach wenigstens einem der Ansprüche 16 bis 18, **dadurch gekennzeichnet, dass** zusätzlich zur Position der ausgewählten, geeigneten Parklücke (L1, L3) die vorteilhafte Trajektorie (TE1, TE2, TE3, TE4) der ausgewählten, geeigneten Parklücke (L1, L3), insbesondere die vorteilhafte Einparktrajektorie (TE1, TE2, TE3, TE4) und/oder eine zu erreichende Parkposition (E1, E2), an das parklückensuchende Fahrzeug (F2) und/oder das Mobilgerät übermittelt wird.

20. Verfahren nach wenigstens einem der Ansprüche 16 bis 19, **dadurch gekennzeichnet, dass** die vorteilhafte Trajektorie (TE1, TE2, TE3, TE4) der ausgewählten, geeigneten Parklücke (L1, L2) und/oder die zu erreichende Parkposition (E1, E2) mittels einer Anzeigeeinrichtung im parklückensuchenden Fahrzeug (F2) und/oder auf dem Mobilgerät angezeigt wird.

21. Verfahren nach Anspruch 19 oder 20, **dadurch gekennzeichnet, dass** die übermittelte, vorteilhafte Trajektorie (TE1, TE2, TE3, TE4) und/oder die übermittelte, zu erreichende Parkposition (E1, E2) als Vorgabe für eine Parkassistenzvorrichtung genutzt wird, insbesondere zum assistierten oder autonomen Parken des parklückensuchenden Fahrzeugs (F2).

22. Fahrzeug (F, F1, F2), insbesondere Kraftfahrzeug, wobei das Fahrzeug (F, F1, F2) wenigstens eine Sensoreinrichtung zum Erfassen wenigstens einer Zustandsgröße des Fahrzeugs (F, F1, F2), eine Identifikationseinrichtung zum Identifizieren einer Parklücke (L1, L2, L3, L4), und Kommunikationsmittel zum Bereitstellen einer Kommunikationsverbindung mit einem Parkraumverwaltungssystem (100) aufweist, und wobei das Fahrzeug (F, F1, F2) dazu ausgebildet ist, Positionsdaten einer Parklücke (L1, L2, L3, L4) sowie Daten mit Informationen über die Eigenschaften der Parklücke (L1, L2, L3, L4) an ein Parkraumverwaltungssystem (100) zu senden,
**dadurch gekennzeichnet, dass** das Fahrzeug (F, F1, F2) dazu ausgebildet ist, erfasste Zustandsgrößen des Fahrzeugs (F, F1, F2) zur Ermittlung von Eigenschaften einer Parklücke (L1, L2, L3, L4) und/oder Eigenschaften einer Parklücke (L1, L2, L3, L4), die in Abhängigkeit von den erfassten Zustandsgrößen ermittelt worden sind, an ein Parkraumverwaltungssystem (100) zu übertragen, insbesondere an ein Parkraumverwaltungssystem (100), das nach einem der Ansprüche 12 bis 15 ausgebildet ist.

23. Fahrzeug (F, F1, F2) nach Anspruch 22 **dadurch gekennzeichnet, dass** das Fahrzeug (F, F1, F2) eine Auswerteinrichtung zum Auswerten und Prüfen der erfassten Zustandsgrößen des Fahrzeugs (F, F1, F2) aufweist, insbesondere zum Prüfen, ob das Fahrmanöver ein beendeter Parkvorgang ist, wobei die Auswerteinrichtung vorzugsweise dazu ausgebildet ist, ein Fahrmanöver als beendeten Parkvorgang zu erkennen, wenn wenigstens eine, für einen beendeten Parkvorgang charakteristische, vordefinierte Bedingung erfüllt ist, und falls ein beendeter Parkvorgang erkannt worden ist, Zustandsgrößen des Fahrzeugs (F, F1, F2) zur Ermittlung von Eigenschaften der Parklücke (L1, L2, L3, L4) an das Parkraumverwaltungssystem (100) zu übertragen, oder eine oder mehrere Eigenschaften der Parklücke (L1, L2, L3, L4) anhand der erfassten Fahrzustandsgrößen und/oder bereitgestellter Fahrzeugdaten zu ermitteln, wobei das Fahrzeug (F, F1, F2) und/oder die Auswerteinrichtung vorzugsweise zur Durchführung der in den Ansprüchen 2 bis 11 angegebenen Verfahrensschritte ausgebildet ist.
